(19) Europäisches Patentamt
European Patent Office
Office européen des brevets

(11) **EP 4 685 673 A1**

(12) **EUROPEAN PATENT APPLICATION**
published in accordance with Art. 153(4) EPC

(43) Date of publication:
**28.01.2026 Bulletin 2026/05**

(21) Application number: **24787755.8**

(22) Date of filing: **16.01.2024**

(51) International Patent Classification (IPC):
**G06F 18/214** (2023.01)    **G06F 18/24** (2023.01)
**G06F 18/25** (2023.01)    **G06N 3/0464** (2023.01)
**G06N 3/0442** (2023.01)    **G06N 3/045** (2023.01)
**G06N 3/048** (2023.01)    **G06N 3/084** (2023.01)

(86) International application number:
**PCT/CN2024/072506**

(87) International publication number:
**WO 2024/212648 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.04.2023 CN 202310444662**

(71) Applicant: **Huawei Technologies Co., Ltd.
Shenzhen, Guangdong 518129 (CN)**

(72) Inventors:
• **TIAN, Yuchuan
Shenzhen, Guangdong 518129 (CN)**
• **CHEN, Hanting
Shenzhen, Guangdong 518129 (CN)**
• **WANG, Xutao
Shenzhen, Guangdong 518129 (CN)**
• **BAI, Zheyuan
Shenzhen, Guangdong 518129 (CN)**
• **WANG, Yunhe
Shenzhen, Guangdong 518129 (CN)**

(74) Representative: **Isarpatent
Patent- und Rechtsanwälte Partg mbB
Friedrichstraße 31
80801 München (DE)**

(54) **METHOD FOR TRAINING CLASSIFICATION MODEL, AND RELATED APPARATUS**

(57)    A classification model training method is provided, and is applied to the field of artificial intelligence technologies. In the method, target training data with a smaller data amount is first generated based on original training data, to obtain training data of different scales, and ensure scale diversity of the training data. In addition, considering a characteristic of AI-generated data, for target training data that has a small data amount and that is originally AI-generated, this part of target training data is marked as unlabeled data, so that during training, a classification model can focus on data that is AI-generated and that is different from manually generated data, to avoid affecting perception of an AI-generated data style by the classification model when the data is marked as the AI-generated data, and effectively improve prediction accuracy of the classification model.

Obtain a plurality of pieces of original training data, where a category label corresponding to each of the plurality of pieces of original training data is user-generated data or AI-generated data — 501

Obtain a plurality of pieces of target training data based on the plurality of pieces of original training data, where a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data — 502

Input the plurality of pieces of target training data into a classification model, to obtain a plurality of classification results corresponding to the plurality of pieces of target training data — 503

Update a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated — 504

FIG. 5

EP 4 685 673 A1

## Description

This application claims priority to Chinese Patent Application No. 202310444662.7, filed with the China National Intellectual Property Administration on April 14, 2023 and entitled "CLASSIFICATION MODEL TRAINING METHOD AND RELATED APPARATUS", which is incorporated herein by reference in its entirety.

## TECHNICAL FIELD

This application relates to the field of artificial intelligence (Artificial Intelligence, AI) technologies, and in particular, to a classification model training method.

## BACKGROUND

With the rapid development of AI technologies, AI-generated data is closer to human-generated data. Therefore, more applications use the AI-generated data during running. The AI-generated data may include, for example, data such as a text, a voice, a video, and an image.

An AI-generated text is used as an example. To prevent AI-generated junk texts or error information from causing adverse consequences, AI-generated text detection becomes an important technology. The AI-generated text detection is mainly used to determine whether content of a to-be-detected text is manually generated or AI-generated.

In a conventional AI-generated text detection solution, a binary classification technology is usually used, the to-be-detected text is input into a pre-trained model, and the model outputs a final prediction result, to be specific, predicts whether the text is manually generated or AI-generated. However, in the conventional technology, there is a specific requirement on a length of an input text, and when the input text is short, it is usually impossible to obtain an accurate prediction result.

## SUMMARY

This application provides a classification model training method, to effectively improve prediction accuracy of a classification model.

According to a first aspect, this application provides a classification model training method, applied to the field of artificial intelligence technologies. The method includes: first, obtaining a plurality of pieces of original training data, where a category label corresponding to each of the plurality of pieces of original training data is user-generated data or AI-generated data, in other words, a generation manner of the original training data is either user-generated or AI-generated; and the plurality of pieces of original training data are data of a same type, for example, a data type of the plurality of pieces of original training data is any one of the following types: a text, an image, a video, and a voice;

then, obtaining a plurality of pieces of target training data based on the plurality of pieces of original training data, where a first part of data of the plurality of pieces of target training data belongs to the plurality of pieces of original training data, that is, the first part of data is a subset of the plurality of pieces of original training data; and each piece of target training data in a second part of data of the plurality of pieces of target training data is obtained based on corresponding original training data in the plurality of pieces of original training data, and a data amount of each piece of target training data is less than a data amount of the corresponding original training data; in other words, each piece of target training data in the second part of data of the plurality of pieces of target training data corresponds to one piece of original training data, and each piece of target training data in the second part of data is obtained based on the corresponding original training data;

next, inputting the plurality of pieces of target training data into a classification model, to obtain a plurality of classification results corresponding to the plurality of pieces of target training data, where the classification model may be an AI model that executes a binary classification task, and is used to perform classification prediction on input data of the classification model, and each of the plurality of classification results indicates a category to which corresponding target training data belongs, to be specific, indicates that target training data belongs to user-generated data or AI-generated data; and

finally, updating a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

In this solution, target training data with a smaller data amount is first generated based on original training data, to obtain training data of different scales, and ensure scale diversity of the training data. In addition, considering a characteristic of AI-generated data, for target training data that has a small data amount and that is originally AI-generated, this part of target training data is marked as unlabeled data, so that during training, a classification model can focus on data that is AI-generated and that is different from manually generated data, to avoid affecting perception of an AI-generated data style by the classification model when the data is marked as the AI-generated data, and effectively improve prediction accuracy of the classification model.

In a possible implementation, target training data in the second part of data is obtained based on a part of content of corresponding original training data.

In a possible implementation, the second part of data includes first target training data, and the first target training data is obtained by cropping a part of content of original training data corresponding to the first target training data. For example, it is assumed that the original training data corresponding to the first target training data is a text, and text content of the original training data is specifically "Hello! How are you! I am fine, thank you! And you?". In this case, text content of the first target training data may be "How are you! I am fine, thank you! And you?".

In a possible implementation, the second part of data includes second target training data, and the second target training data is obtained by fusing a plurality of parts of content obtained by cropping original training data corresponding to the second target training data. When the plurality of parts of content are fused, not all content obtained through cropping is fused, but some content is fused, so that a data amount of the obtained second target training data can be less than that of the corresponding original training data.

In this solution, on one hand, original training data is processed to obtain target training data with a smaller data amount, and on the other hand, some original training data is used as target training data, so that multi-scale amplification can be performed on the original training data, to ensure scale diversity of finally obtained target training data.

In a possible implementation, the loss function value is obtained based on a first sub loss function value, the first sub loss function value is obtained based on a first difference and a second difference, the first difference is a difference between a classification result corresponding to the part of target training data and a category label assumed for the target training data, and the second difference is a difference between a classification result corresponding to positive sample training data in the plurality of pieces of target training data and a category label assumed for the positive sample data, where the category labels assumed for the target training data and the positive sample training data are both AI-generated data, and the positive sample training data includes target training data whose category label is user-generated data.

Simply speaking, the first sub loss function value may be understood as a positive-unlabeled (Positive-Unlabeled, PU) loss, and is obtained based on a positive sample (namely, target training data whose category label is user-generated data) and an unlabeled sample (namely, target training data that does not have a category label).

In this solution, the target training data whose category label is user-generated data is considered as the positive sample, and the target training data that does not have a category label is considered as the unlabeled sample. In this way, a classification loss of a negative sample is estimated based on the positive sample and the unlabeled sample, so that during training, the classification model can focus on data that is AI-generated and that is different from manually generated data, to avoid affecting perception of an AI-generated data style by the classification model when the target training data that is AI-generated and whose data amount is small is directly marked as a negative sample, and effectively improve prediction accuracy of the classification model obtained through training.

In a possible implementation, the loss function value is further obtained based on a second sub loss function value, and the second sub loss function value is obtained based on a mean value of differences between the plurality of classification results and the category labels corresponding to the plurality of pieces of target training data, where in a process of determining the second sub loss function value, a category label corresponding to the part of target training data is AI-generated data.

Simply speaking, the second sub loss function value may be understood as a positive-negative (Positive-negative, PN) loss, and is obtained based on a positive sample (namely, target training data whose category label is user-generated data) and a negative sample (namely, target training data whose category label is AI-generated data).

In a possible implementation, the loss function value is obtained by performing weighted summation on the first sub loss function value and the second sub loss function value, and the first sub loss function value and the second sub loss function value correspond to different weights.

According to a second aspect, this application provides a classification method, including:

    obtaining to-be-classified data;
    generating at least one piece of target data based on the to-be-classified data, where the at least one piece of target data is obtained based on the to-be-classified data, and a data amount of the at least one piece of target data is less than a data amount of the to-be-classified data;
    inputting the to-be-classified data and the at least one piece of target data into a classification model, to obtain a plurality of corresponding classification results; and
    obtaining a target classification result based on the plurality of classification results, where the target classification result is used as a classification result of the to-be-classified data.

In this solution, the to-be-classified data is amplified to obtain a plurality of pieces of target data with a smaller data amount, the to-be-classified data and the target data are input to the classification model for classification, and the plurality of classification results output by the classification model are integrated, to obtain a final target classification result of the to-be-classified data. Therefore, a decision of the classification model can be strengthened in a multi-scale perspective, to improve data classification accuracy.

In a possible implementation, the obtaining a target classification result based on the plurality of classification results includes:

performing weighted summation on the plurality of classification results to obtain the target classification result.

In a possible implementation, a weight of each classification result in the plurality of classification results is related to a data amount of model input data corresponding to the classification result.

In a possible implementation, different pieces of target data have different data amounts in the at least one piece of target data.

In a possible implementation, each of the at least one piece of target data is obtained based on a part of content of the to-be-classified data.

In a possible implementation, the at least one piece of target data includes first target data, and the first target data is obtained by cropping some content of the to-be-classified data.

In a possible implementation, the at least one piece of target data includes second target data, and the second target data is obtained by fusing a plurality of parts of content obtained by cropping the to-be-classified data.

According to a third aspect, this application provides a classification model training apparatus, including:

an obtaining module, configured to obtain a plurality of pieces of original training data, where a category label corresponding to each of the plurality of pieces of original training data is user-generated data or AI-generated data; and

a processing module, configured to obtain a plurality of pieces of target training data based on the plurality of pieces of original training data, where a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data, where

the processing module is further configured to input the plurality of pieces of target training data into a classification model, to obtain a plurality of classification results corresponding to the plurality of pieces of target training data; and

the processing module is further configured to update a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

In a possible implementation, target training data in the second part of data is obtained based on a part of content of corresponding original training data.

In a possible implementation, the second part of data includes first target training data, and the first target training data is obtained by cropping a part of content of original training data corresponding to the first target training data.

In a possible implementation, the second part of data includes second target training data, and the second target training data is obtained by fusing a plurality of parts of content obtained by cropping original training data corresponding to the second target training data.

In a possible implementation, a data type of the plurality of pieces of original training data is any one of the following types: a text, an image, a video, and a voice.

In a possible implementation, the loss function value is obtained based on a first sub loss function value, the first sub loss function value is obtained based on a first difference and a second difference, the first difference is a difference between a classification result corresponding to the part of target training data and a category label assumed for the target training data, and the second difference is a difference between a classification result corresponding to positive sample training data in the plurality of pieces of target training data and a category label assumed for the positive sample data, where

the category labels assumed for the target training data and the positive sample training data are both AI-generated data, and the positive sample training data includes target training data whose category label is user-generated data.

In a possible implementation, the loss function value is further obtained based on a second sub loss function value, and the second sub loss function value is obtained based on a mean value of differences between the plurality of classification results and the category labels corresponding to the plurality of pieces of target training data, where in a process of determining the second sub loss function value, a category label corresponding to the part of target training data is AI-generated data.

In a possible implementation, the loss function value is obtained by performing weighted summation on the first sub loss function value and the second sub loss function value, and the first sub loss function value and the second sub loss function value correspond to different weights.

According to a fourth aspect, this application provides a classification apparatus, including:

an obtaining module, configured to obtain to-be-classified data; and

a processing module, configured to generate at least one piece of target data based on the to-be-classified data, where the at least one piece of target data is obtained based on the to-be-classified data, and a data amount of the at least one piece of target data is less than a data amount of the to-be-classified data, where the processing module is further configured to input the to-be-classified data and the at least one piece of target data into a classification model, to obtain a plurality of corresponding classification results; and

the processing module is further configured to obtain a target classification result based on the plurality of classification results, where the target classification result is used as a classification result of the to-be-classified data.

In a possible implementation, the processing module is further configured to perform weighted summation on the plurality of classification results to obtain the target classification result.

In a possible implementation, a weight of each classification result in the plurality of classification results is related to a data amount of model input data corresponding to the classification result.

In a possible implementation, different pieces of target data have different data amounts in the at least one piece of target data.

In a possible implementation, each of the at least one piece of target data is obtained based on a part of content of the to-be-classified data.

In a possible implementation, the at least one piece of target data includes first target data, and the first target data is obtained by cropping some content of the to-be-classified data.

In a possible implementation, the at least one piece of target data includes second target data, and the second target data is obtained by fusing a plurality of parts of content obtained by cropping the to-be-classified data.

According to a fifth aspect, this application provides a classification model training apparatus. The apparatus may include a processor, the processor is coupled to a memory, the memory stores program instructions, and when the program instructions stored in the memory are executed by the processor, the method according to the first aspect or any one of the implementations of the first aspect is implemented. For steps performed by the processor in the possible implementations of the first aspect, refer to the first aspect. Details are not described herein again.

According to a sixth aspect, this application provides a classification apparatus. The apparatus may include a processor, the processor is coupled to a memory, the memory stores program instructions, and when the program instructions stored in the memory are executed by the processor, the method according to the second aspect or any one of the implementations of the second aspect is implemented. For steps performed by the processor in the possible implementations of the second aspect, refer to the second aspect. Details are not described herein again.

According to a seventh aspect, this application provides a computer-readable storage medium. The computer-readable storage medium stores a computer program, and when the computer program is run on a computer, the computer is enabled to perform the method according to any one of the implementations of the first aspect.

According to an eighth aspect, this application provides a circuit system. The circuit system includes a processing circuit, and the processing circuit is configured to perform the method according to any one of the implementations of the first aspect.

According to a ninth aspect, this application provides a computer program product. When the computer program product is run on a computer, the computer is enabled to perform the method according to any one of the implementations of the first aspect.

According to a tenth aspect, this application provides a chip system. The chip system includes a processor, configured to support a server or a threshold obtaining apparatus in implementing a function in any one of the implementations of the first aspect, for example, sending or processing data and/or information in the foregoing method. In a possible design, the chip system further includes a memory. The memory is configured to store program instructions and data that are necessary for the server or a communication device. The chip system may include a chip, or may include a chip and another discrete component.

For beneficial effect of the second aspect to the tenth aspect, refer to the descriptions of the first aspect. Details are not described herein again.

**BRIEF DESCRIPTION OF DRAWINGS**

FIG. 1 is a diagram of a structure of a convolutional neural network according to an embodiment of this application;
FIG. 2 is a diagram of another structure of a convolutional neural network according to an embodiment of this application;
FIG. 3 is a diagram of a system architecture 300 according to an embodiment of this application;
FIG. 4 is a diagram of a structure of an electronic device 101 according to an embodiment of this application;
FIG. 5 is a schematic flowchart of a classification model training method according to an embodiment of this application;
FIG. 6A is a diagram of obtaining a plurality of pieces of target training data based on a plurality of pieces of original training data according to an embodiment of this application;
FIG. 6B is another diagram of obtaining a plurality of pieces of target training data based on a plurality of pieces of original training data according to an embodiment of this application;
FIG. 7 is a diagram of determining category labels of a plurality of pieces of target training data according to an embodiment of this application;
FIG. 8 is a diagram of a classification model training procedure according to an embodiment of this application;
FIG. 9 is a diagram of division into a positive sample, an unlabeled sample, and a negative sample according to an embodiment of this application;
FIG. 10 is a schematic flowchart of a classification method according to an embodiment of this application;
FIG. 11 is a diagram of a data classification architecture according to an embodiment of this application;
FIG. 12 is a schematic flowchart of data classification according to an embodiment of this application;
FIG. 13 is a diagram of a structure of a classification model training apparatus according to an embodiment of this application;
FIG. 14 is a diagram of a structure of a classification apparatus according to an embodiment of this application;
FIG. 15 is a diagram of a structure of an execution device according to an embodiment of this application;
FIG. 16 is a diagram of a structure of a chip according to an embodiment of this application; and
FIG. 17 is a diagram of a structure of a computer-readable storage medium according to an embodiment of this application.

**DESCRIPTION OF EMBODIMENTS**

To make the objectives, technical solutions, and advantages of this application clearer and more comprehensible, the following describes embodiments of this application with reference to the accompanying drawings. Clearly, the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions used in such a manner are interchangeable in appropriate situations, so that embodiments can be implemented in another order than the order illustrated or described in this application. Moreover, the terms "include", "contain" and any other variants mean to cover the non-exclusive inclusion, for example, a process, method, system, product, or device that includes a list of steps or modules is not necessarily limited to those listed steps or modules, but may include other steps or modules not expressly listed or inherent to such a process, method, product, or device. Names or numbers of steps in this application do not mean that steps in a method procedure need to be performed in a time/logical sequence indicated by the names or numbers. An execution sequence of procedure steps that have been named or numbered may be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f\left(W^T x\right) = f\left(\sum_{s=1}^{n} W_s x_s + b\right)$$

Herein, s=1, 2, ..., and n, n is a natural number greater than 1, Ws is a weight of $x_s$, b is a bias of the neuron, and f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by joining a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. There is no special measurement criterion for "many" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$, where $\vec{x}$ is an input vector, $\vec{y}$ is an output vector, $\vec{b}$ is a bias vector, W is a weight matrix (also referred to as a coefficient), and $\alpha()$ is an activation function. At each layer, the output vector $\vec{y}$ is obtained by performing such a simple operation on the input vector $\vec{x}$. Because the DNN includes a large quantity of layers, there are a large quantity of coefficients W and a large quantity of offset vectors $\vec{b}$. These parameters are defined in the DNN as follows: The coefficient W is used as an example. It is assumed that in a three-layer DNN, a linear coefficient from a fourth neuron at a second layer to a second neuron at a third layer is defined as $w_{24}^3$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^L$. It should be noted that the input layer has no parameter W. In the deep neural network, more hidden layers make the network more capable of describing a complex case in the real world. Theoretically, a prediction model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Convolutional neural network (Convolutional Neural Network, CNN)

The convolutional neural network is a deep neural network of a convolutional structure. The convolutional neural network includes a feature extractor including a convolutional layer and a sub-sampling layer. The feature extractor may be considered as a filter. A convolution process may be considered as performing convolution by using a trainable filter and an input image or a feature map (feature map). The convolutional layer is a neuron layer (for example, a first convolutional layer and a second convolutional layer in this embodiment) that performs convolution processing on an input signal in the convolutional neural network. At the convolutional layer of the convolutional neural network, one neuron may be connected to only a part of neurons at a neighboring layer. A convolutional layer usually includes several feature planes, and each feature plane may include some neurons arranged in a rectangle. Neurons in a same feature plane share a weight, and the weight shared herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, the same image information obtained through learning can be used for all locations on the image. At a same convolutional layer, a plurality of convolution kernels may be used for extracting different image information. Usually, a larger quantity of convolution kernels indicates richer image information reflected in a convolution operation.

The convolution kernel may be initialized in a form of a random-size matrix. In a process of training the convolutional neural network, an appropriate weight may be obtained through learning for the convolution kernel. In addition, benefits directly brought by weight sharing are that connections between layers of the convolutional neural network are reduced, and an overfitting risk is reduced.

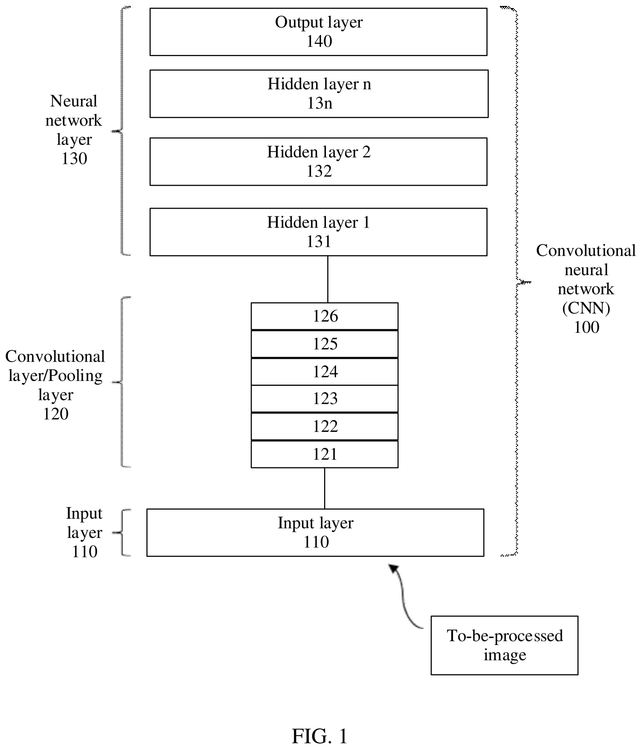

Specifically, as shown in FIG. 1, a convolutional neural network 100 may include an input layer 110, a convolutional layer/pooling layer 120, and a neural network layer 130. The pooling layer is optional.

A structure including the convolutional layer/pooling layer 120 and the neural network layer 130 may be the first convolutional layer and the second convolutional layer described in this application. The input layer 110 is connected to the convolutional layer/pooling layer 120, the convolutional layer/pooling layer 120 is connected to the neural network layer 130, an output of the neural network layer 130 may be input to the activation layer, and the activation layer may perform non-linear processing on the output of the neural network layer 130.

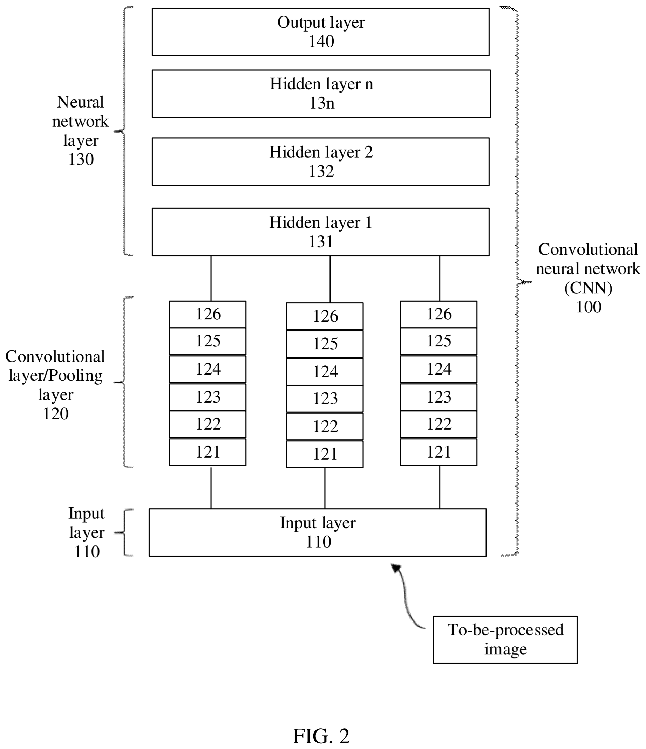

Convolutional layer/Pooling layer 120: Convolutional layer: As shown in FIG. 2, the convolutional layer/pooling layer 120 may include, for example, layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the 123 layer is a pooling layer, the layers 124 and 125 are convolutional layers, and the layer 126 is a pooling layer. That is, an output of a convolutional layer may be used as an input of a subsequent pooling layer, or may be used as an input of another convolutional layer to continue a convolution operation.

The convolutional layer 121 is used as an example. The convolutional layer 121 may include a plurality of convolution operators. A convolution operator is also referred to as a kernel. In image processing, the convolution operator functions as a filter that extracts specific information from an input image matrix. The convolution operator may be essentially a weight matrix, and the weight matrix is usually predefined. In a process of performing a convolution operation on an image, the weight matrix is usually used to process pixels at a granularity level of one pixel (or two pixels, which depends on a value of a stride (stride)) in a horizontal direction on the input image, to extract a specific feature from the image. A size of the weight matrix needs to be related to a size of the image. It should be noted that a depth dimension (depth dimension) of the weight matrix is the same as a depth dimension of the input image. During a convolution operation, the weight matrix extends to an entire depth of the input image. Therefore, a convolution output of a single depth dimension is generated by performing convolution with a single weight matrix. However, in most cases, a plurality of weight matrices of a same dimension rather than a single weight matrix are applied. Outputs of the weight matrices are stacked to form a depth dimension of a convolutional image. Different weight matrices may be used to extract different features of the image. For example, one weight matrix is used to extract edge information of the image, another weight matrix is used to extract a specific color of the image, still another weight matrix is used to blur an unnecessary noise in the image, and so on. Because the plurality of weight matrices have the same dimension, feature maps extracted by using the plurality of weight matrices with the same dimension also have a same dimension. Then, the plurality of extracted feature maps with the same dimension are combined to form an output of the convolution operation.

Weight values in these weight matrices need to be obtained in actual application through massive training. The weight matrices that are formed based on the weight values obtained through training may be used to extract information from the input image, to help the convolutional neural network 100 perform correct prediction.

When the convolutional neural network 100 includes a plurality of convolutional layers, a large quantity of general features are usually extracted at an initial convolutional layer (for example, the convolutional layer 121). The general feature may be also referred to as a low-level feature. As a depth of the convolutional neural network 100 increases, a feature extracted at a more subsequent convolutional layer (for example, the convolutional layer 126) is more complex, for example, a high-level semantic feature. A feature with higher semantics is more applicable to a to-be-resolved problem.

Pooling layer: Because a quantity of training parameters usually needs to be reduced, the pooling layer usually needs to be periodically introduced after a convolution layer. To be specific, for the layers 121 to 126 in 120 in FIG. 1, there may be one pooling layer following one convolution layer, or one or more pooling layers following a plurality of convolution layers.

Neural network layer 130: After processing is performed by the convolutional layer/pooling layer 120, the convolutional neural network 100 still cannot output required output information. As described above, at the convolutional layer/pooling layer 120, only a feature is extracted, and parameters resulting from the input image are reduced. However, to generate final output information (required class information or other related information), the convolutional neural network 100 needs to use the neural network layer 130 to generate one or a group of outputs of a quantity of required classes. Therefore, the neural network layer 130 may include a plurality of hidden layers (131, 132, ..., and 13n shown in FIG. 1) and an output layer 140. Parameters included in the plurality of hidden layers may be obtained through pre-training based on related training data of a specific task type. For example, the task type may include image recognition, image classification, super-resolution image reconstruction, text classification, voice classification, and the like.

The plurality of hidden layers in the neural network layer 130 are followed by the output layer 140, namely, the last layer of the entire convolutional neural network 100. The output layer 140 has a loss function value similar to classification cross entropy, and the loss function value is specifically used to calculate a prediction error. Once forward propagation (for example, propagation from the layer 110 to the layer 140 in FIG. 2 is forward propagation) of the entire convolutional neural network 100 is completed, back propagation (for example, propagation from the layer 140 to the layer 110 in FIG. 2 is back propagation) is started to update weight values and deviations of the layers mentioned above, to reduce a loss of the convolutional neural network 100 and an error between a result output by the convolutional neural network 100 through the output layer and an ideal result.

It should be noted that the convolutional neural network 100 shown in FIG. 1 is merely used as an example of a convolutional neural network. In specific application, the convolutional neural network may alternatively exist in a form of another network prediction model, for example, a model in which a plurality of convolutional layers/pooling layers are parallel as shown in FIG. 2, and extracted features are all input into the neural network layer 130 for processing.

(4) Recurrent neural network (Recurrent Neural Network, RNN)

The recurrent neural network is a type of a recursive neural network (recursive neural network) in which sequence (sequence) data is used as input, recursion (recursion) is performed in a sequence evolution direction, and all nodes (recurrent units) are connected in a chain form.

The recurrent neural network has memory, parameter sharing, and Turing completeness (Turing completeness), and therefore has some advantages in learning nonlinear features of a sequence. The recurrent neural network is used in natural language processing (Natural Language Processing, NLP), such as speech recognition, language modeling, and machine translation, and is also used in various types of time series forecasting. The recurrent neural network built by using a convolutional neural network may process a computer vision problem including sequence input.

The RNN is intended to process sequence data. In a conventional neural network prediction model, from an input layer to a hidden layer to an output layer, the layers are fully connected, and nodes at different layers are not connected. However, this common neural network is incompetent for many problems. For example, to predict a next word in a sentence, a previous word usually needs to be used, because the previous word and the next word in the sentence are not independent of each other. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are no longer unconnected, but are connected, and an input of the hidden layer not only includes an output of the input layer, but also includes an output of the hidden layer at a previous moment. Theoretically, the RNN can process sequence data of any length. However, in practice, to reduce complexity, it is often assumed that a current state is related only to previous several states.

Specifically, a core part of the RNN is a directed graph (directed graph). Elements connected in a chain in an expanded directed graph are referred to as RNN cells (RNN cells). Generally, a chain connection formed by the RNN cells may be similar to a hidden layer in a feedforward neural network, but in different discussions, the "layer" of the RNN may refer to an RNN cell of a single time-step or all the RNN cells. Therefore, as a general description, the concept of "hidden layer" is avoided herein. Learning data $X = \{X_1, X_2, ..., X_\tau\}$ input by sequence is given, and an expansion length of the RNN is $\tau$. A to-be-processed sequence is usually a time sequence. In this case, an evolution direction of the sequence is referred to as a time-step (time-step).

(5) Residual network (Residual Network, ResNet)

The residual network is an improved convolutional neural network, which is characterized by easy optimization and can improve accuracy by increasing a considerable depth. A residual block inside the residual network uses a jump connection, which alleviates a gradient disappearance problem caused by increasing the depth in the deep neural network.

(6) Loss function

In a process of training a neural network, because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before the first update, to be specific, a parameter is preconfigured for each layer of the neural network). For example, if the predicted value of the network is large, the weight vector is adjusted to lower the predicted value until the neural network can predict the target value that is actually expected or a value close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value of the loss function (loss) (namely, a loss function value) indicates a larger difference. Therefore, training of the neural network is a process of minimizing the loss function value as much as possible.

(7) Back propagation algorithm

In the neural network, an error back propagation (back propagation, BP) algorithm may be used to correct a value of a parameter in an initial prediction model in a training process, so that an error loss of the prediction model becomes increasingly small. Specifically, an input signal is transferred forward until an error loss occurs in an output, and the parameter in the initial prediction model is updated based on back propagation error loss information, so that the error loss converges. The back propagation algorithm is an error-loss-centered back propagation motion, and is intended to obtain an optimal prediction model parameter, for example, a weight matrix.

(8) Gradient descent (Gradient descent) method

The gradient descent method is a first-order optimization algorithm, and is often used in machine learning to recursively approach a minimum deviation prediction model. To find a local minimum value of a function by using the gradient descent method, iterative search needs to be performed on a specified step distance point in an opposite direction of a gradient (or an approximate gradient) of the function based on a current point. The gradient descent method is one of the most commonly used methods for solving a prediction model parameter of a machine learning algorithm, namely, an unconstrained optimization problem.
Specifically, when a minimum value of a loss function is solved, the gradient descent method may be used to perform iterative solving step by step, to obtain a minimum loss function value and a prediction model parameter value. Conversely, if a maximum value of a loss function needs to be solved, a gradient rise method needs to be used for iteration.
Currently, AI-generated data is increasingly widely used in human daily life. The AI-generated data may include, for example, data such as a text, an image, a video, and a voice. An AI-generated text is used as an example. To prevent AI-generated junk texts or error information from causing adverse consequences, AI-generated text detection becomes an important technology. The AI-generated text detection is mainly used to determine whether content of a to-be-detected text is manually generated or AI-generated.
In a conventional AI-generated text detection solution, a binary classification technology is usually used, the to-be-detected text is input into a pre-trained model, and the model outputs a final prediction result, that is, predicts whether the text is manually generated or AI-generated. However, in the conventional technology, there is a specific requirement on a length of an input text, and when the input text is short, it is usually impossible to obtain an accurate prediction result.
The applicant finds through research that, in a conventional AI-generated data detection solution, a problem of a relationship between a data amount of to-be-detected data and detection difficulty is ignored. For example, during the AI-generated text detection, a length of the to-be-detected text affects the detection difficulty to some extent. Specifically, as the length of the text decreases, the AI-generated text becomes more similar to a human-generated text, and consequently, the detection difficulty of the AI-generated text is large. In an extreme case, when the length of the text is a length of a single word or a phrase, it is almost impossible to objectively determine that a source of the text of the single word or phrase is AI or human. In this case, if a short text is simply marked as AI-generated, perception of an AI-generated text style by a text detection model is affected, and consequently, a prediction effect of the text detection model is poor.
In addition to the AI-generated text detection, a similar problem exists when other AI-generated data is detected by using the conventional technology. For ease of description, in embodiments of this application, the AI-generated text detection is used as an example for description. A problem encountered when other AI-generated data is detected is similar, and details are not described herein again.
In view of this, embodiments of this application provide a classification model training method. Target training data with a smaller data amount is first generated based on original training data, to obtain training data of different scales, and ensure scale diversity of the training data. In addition, considering a characteristic of AI-generated data, for target training data that has a small data amount and that is originally AI-generated, this part of target training data is marked as unlabeled data, so that during training, a classification model can focus on data that is AI-generated and that is different from manually generated data, to avoid affecting perception of an AI-generated data style by the classification model when the data is marked as the AI-generated data, and effectively improve prediction accuracy of the classification model.
For ease of understanding, the following first describes the classification model training method provided in embodiments of this application and a system architecture to which a classification method is applied.

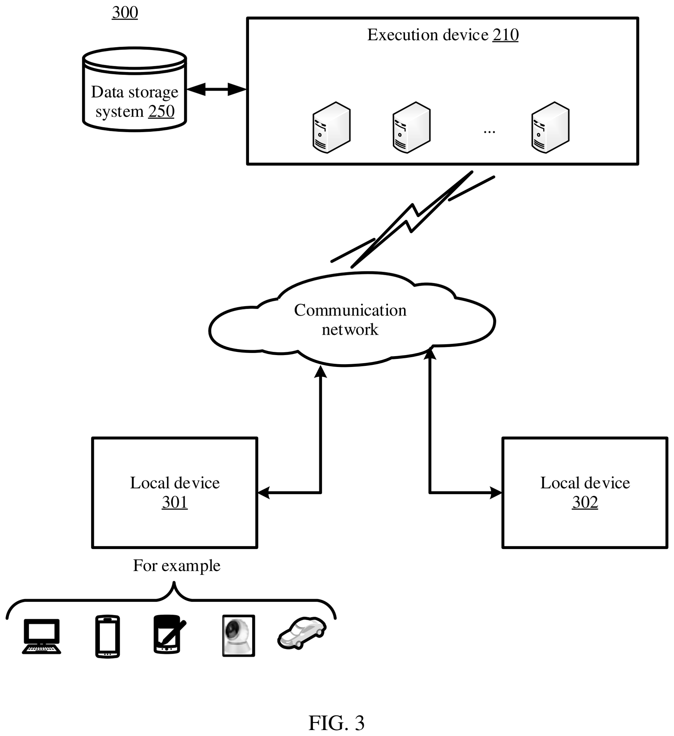

FIG. 3 is a diagram of a system architecture 300 according to an embodiment of this application. As shown in FIG. 3, in the system architecture 300, an execution device 210 may be implemented by one or more servers, and optionally cooperates with another computing device, for example, a data storage device, a router, or a load balancer. The execution device 210 may be disposed on one physical site, or distributed on a plurality of physical sites. The execution device 210 may implement the classification model training method provided in embodiments of this application by using data in a data storage system 250 or by invoking program code in a data storage system 250, to obtain a model.

Users may operate respective user equipments (for example, a local device 301 and a local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 210 via a communication network of any communication mechanism/communication standard. The communication network may be a wide area network, a local area network, a point-to-point connection, or any combination thereof.

In an implementation, the execution device 210 is configured to: implement the classification model training method provided in embodiments of this application, and send the obtained model to the local device 301 and the local device 302 through the communication network, so that the local device 301 and the local device 302 can deploy and run the model, to implement the classification method provided in embodiments of this application.

In another implementation, one or more aspects of the execution device 210 may be implemented by each local device. For example, the local device 301 may provide local data for or feed back a calculation result to the execution device 210, or may perform the classification model training method and the classification method provided in embodiments of this application.

It should be noted that all functions of the execution device 210 may also be implemented by the local device. For example, the local device 301 implements a function of the execution device 210 and provides a service for a user of the local device 301, or provides a service for a user of the local device 302.

In conclusion, the classification model training method and the classification method provided in embodiments of this application may be applied to an electronic device, for example, the foregoing execution device 210, the local device 301, or the local device 302. For example, the electronic device may be a device like a server, a wireless electronic device in industrial control, a smartphone (mobile phone), a personal computer (personal computer, PC), a notebook computer, or a tablet computer. For ease of understanding, the following describes the method by using an example in which the method provided in embodiments of this application is applied to a server.

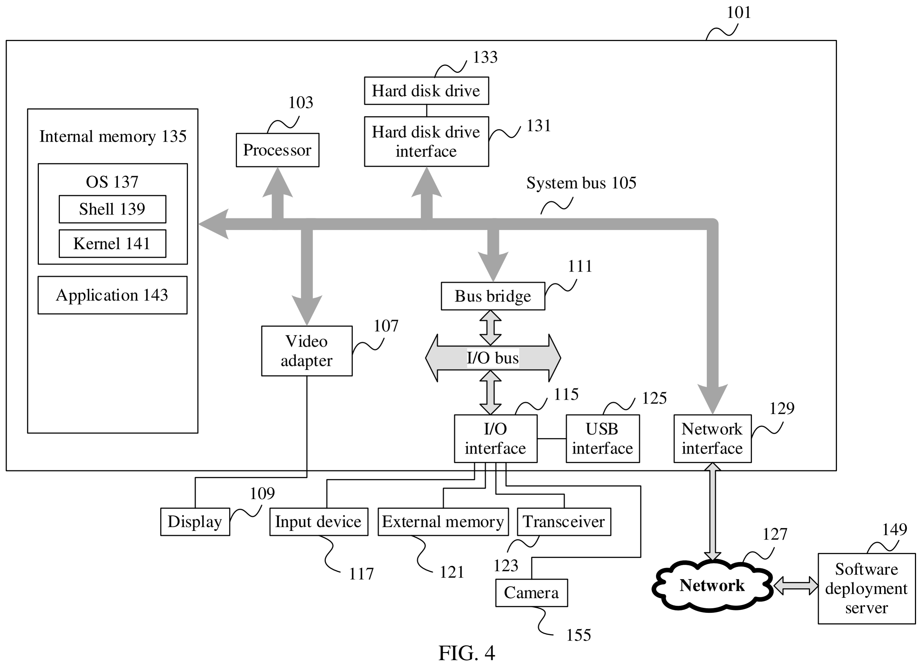

FIG. 4 is a diagram of a structure of an electronic device 101 according to an embodiment of this application. As shown in FIG. 4, the electronic device 101 includes: a processor 103, where the processor 103 is coupled to a system bus 105, the processor 103 may be one or more processors, and each processor may include one or more processor cores; and a video adapter (video adapter) 107, where the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of types of I/O devices such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB interface 125. Optionally, an interface connected to the I/O interface 115 may be a USB interface.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 101 may communicate with a software deployment server 149 through a network interface 129. For example, the network interface 129 is a hardware network interface, for example, a network adapter. A network 127 may be an external network, for example, the internet, or may be an internal network, for example, the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to a hard disk drive 133. An internal memory 135 is coupled to the system bus 105. Data running in the internal memory 135 may include an operating system (OS) 137, an application 143, and a scheduling table of the electronic device 101.

The operating system includes a shell 139 and a kernel (kernel) 141. The shell 139 is an interface between a user and the kernel of the operating system. The shell is the outermost layer of the operating system. The shell manages interaction between the user and the operating system: waiting for an input from the user, interpreting the input from the user to the operating system, and processing various output results of the operating system.

The kernel 141 includes parts in the operating system that are used to manage a memory, a file, a peripheral, and a system resource. The kernel 141 directly interacts with hardware. The kernel of the operating system usually runs a process, provides inter-process communication, and provides CPU time slice management, interruption, memory management, I/O management, and the like.

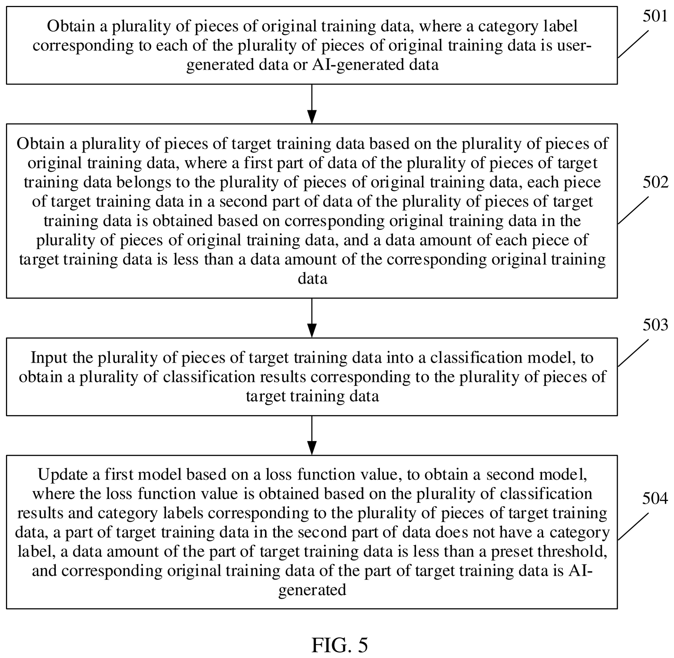

FIG. 5 is a schematic flowchart of a classification model training method according to an embodiment of this application. As shown in FIG. 5, the classification model training method includes Step 501 to Step 504.

Step 501: Obtain a plurality of pieces of original training data, where a category label corresponding to each of the plurality of pieces of original training data is user-generated data or AI-generated data.

In this embodiment, the plurality of pieces of original training data are data of a same type, for example, the data type of the plurality of pieces of original training data is any one of the following types: a text, an image, a video, and a voice.

For any one of the plurality of pieces of original training data, the original training data may be user-generated (namely, manually generated), or may be AI-generated (for example, generated by using an AI model). In other words, a generation manner of the original training data is either user-generated or AI-generated. In addition, not all data in the plurality of pieces of original training data corresponds to a same generation manner. To be specific, a part of data in the plurality of pieces of original training data is user-generated, and the other part of data in the plurality of pieces of original training data is AI-generated.

Therefore, when the plurality of pieces of original training data are classified in a data generation manner, the category label corresponding to each piece of original training data is user-generated data or AI-generated data. When a category label corresponding to original training data is user-generated data, it indicates that the original training data is user-generated. When a category label corresponding to original training data is AI-generated data, it indicates that the original training data is AI-generated.

When the original training data is the user-generated data, if the original training data is a text, the original training data may be specifically a text edited by the user; if the original training data is an image, the image may be an image obtained by the user in a manner of shooting, drawing, artificial synthesis, or the like; if the original training data is a video, the video may be a video obtained by the user in a manner of creation, recording, clipping, or the like; or if the original training data is a voice, the video may be a voice obtained by the user in a manner of creation, recording, or the like. In conclusion, a manner of generating the original training data by the user is not limited in embodiments of this application.

Step 502: Obtain a plurality of pieces of target training data based on the plurality of pieces of original training data, where a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data.

In this embodiment, that a first part of data of the plurality of pieces of target training data belongs to the plurality of pieces of original training data means that the first part of data of the plurality of pieces of target training data is a subset of the plurality of pieces of original training data. In other words, in this embodiment, a part of data of the plurality of pieces of original training data may be used as the first part of data of the plurality of pieces of target training data; or the plurality of pieces of original training data may be used as the first part of data of the plurality of pieces of target training data. For example, when the plurality of pieces of original training data include a total of 10,000 pieces of data, the first part of data of the plurality of pieces of target training data may include a part of data of the 10,000 pieces of data, for example, include 5000 pieces of data; or the first part of data of the plurality of pieces of target training data is the 10,000 pieces of data.

In addition, each piece of target training data in the second part of data of the plurality of pieces of target training data corresponds to one piece of original training data, and each piece of target training data in the second part of data is obtained based on the corresponding original training data.

In the second part of data of the plurality of pieces of target training data, different target training data may correspond to different original training data, to be specific, one piece of original training data corresponds to only one piece of target training data; or different target training data may correspond to same original training data, to be specific, one piece of original training data may correspond to one or more pieces of target training data. In addition, the second part of data of the plurality of pieces of target training data may correspond to all of the plurality of pieces of original training data, to be specific, each piece of original training data is used to generate corresponding target training data; or the second part of data of the plurality of pieces of target training data may correspond to some of the plurality of pieces of original training data, to be specific, only some original training data is used to generate corresponding target training data.

In conclusion, the first part of data of the plurality of pieces of target training data may be a part or all of the plurality of pieces of original training data, the second part of data of the plurality of pieces of target training data may be obtained based on a part or all of the plurality of pieces of original training data, and one piece of original training data may correspond to one or more pieces of target training data in the second part of data.

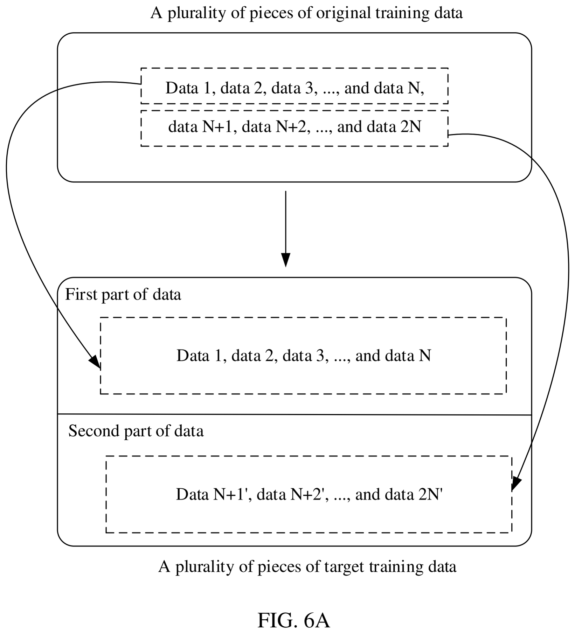

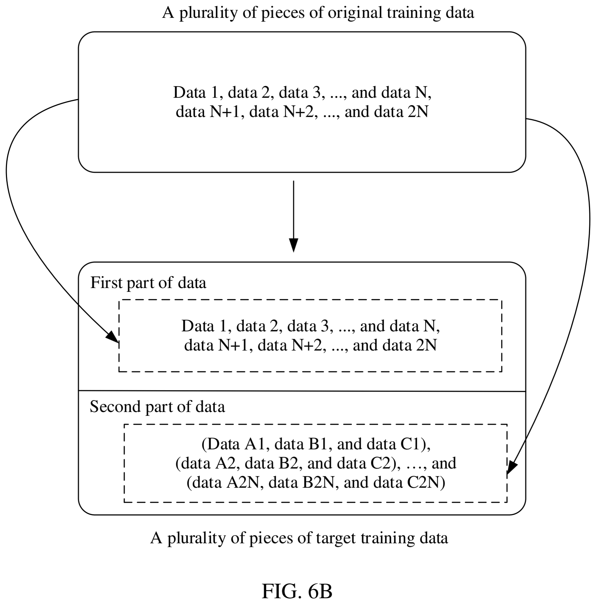

For example, refer to FIG. 6A and FIG. 6B. FIG. 6A is a diagram of obtaining a plurality of pieces of target training data based on a plurality of pieces of original training data according to an embodiment of this application. FIG. 6B is another diagram of obtaining a plurality of pieces of target training data based on a plurality of pieces of original training data according to an embodiment of this application. As shown in FIG. 6A, the plurality of pieces of original training data include 2N pieces of data in total: specifically, data 1, data 2, data 3, ..., and data 2N. When the plurality of pieces of target training data are obtained based on the plurality of pieces of original training data, a first part of data of the plurality of pieces of target training data includes N pieces of data: specifically, data 1, data 2, ..., and data N. In other words, the first part of data of the plurality of pieces of target training data is the N pieces of data in the plurality of pieces of original training data. In addition, a second part of data of the plurality of pieces of target training data also includes N pieces of data: specifically, data N+1', data N+2', ..., and data 2N', where the data N+1' corresponds to data N+1 in the plurality of pieces of original training data, the data N+2' corresponds to data N+2 in the plurality of pieces of original training data, ..., and the data 2N' corresponds to the data 2N in the plurality of pieces of original training data. In other words, each of the data N+1 to the data 2N in the plurality of pieces of original training data corresponds to a unique piece of target training data.

As shown in FIG. 6B, the plurality of pieces of original training data include 2N pieces of data in total: specifically, data 1, data 2, ..., and data 2N. When the plurality of pieces of target training data are obtained based on the plurality of pieces of original training data, a first part of data of the plurality of pieces of target training data also includes 2N pieces of data: specifically, data 1, data 2, ..., and data 2N. In other words, the first part of data of the plurality of pieces of target training data is the plurality of pieces of original training data. In addition, the second part of data of the plurality of pieces of target training data includes 2N groups of data, each group of data includes a plurality of pieces of target training data, and different target training data in a same group of data is obtained based on same original training data. Specifically, in the second part of data, data A1, data B1, and data C1 in a first group of data are all obtained by using the data 1 in the plurality of pieces of original training data. Data A2, data B2, and data C2 in a second group of data are all obtained by using the data 2 in the plurality of pieces of original training data, and so on. Data A2N, data B2N, and data C2N in a 2N$^{th}$ group of data are all obtained by using the data 2N in the plurality of pieces of original training data. In other words, each of the plurality of pieces of original training data may be used to generate the plurality of pieces of target training data.

The foregoing describes a process of obtaining the plurality of pieces of target training data. The following describes a specific manner of obtaining the target training data based on the original training data.

There may be a plurality of manners of obtaining the target training data based on the original training data, and in each manner, it needs to be ensured that a data amount of the obtained target training data is less than a data amount of the corresponding original training data, in other words, content included in the target training data is less than content included in the corresponding original training data.

In a possible implementation, the original training data is cropped to obtain the corresponding target training data, and the target training data includes only a part of content of the original training data.

For example, the second part of data may include first target training data, and the first target training data is obtained by cropping a part of content of original training data corresponding to the first target training data. For example, it is assumed that the original training data corresponding to the first target training data is a text, and text content of the original training data is specifically "Hello! How are you! I am fine, thank you! And you?". In this case, the first target training data may be obtained after the text content is cropped. For example, the text content of the first target training data is "How are you! I am fine, thank you! And you?". Similarly, it is assumed that the original training data corresponding to the first target training data is a video or a voice. In this case, a segment of content in the video or the voice may be cropped, to obtain the first target training data with a shorter length. For another example, it is assumed that the original training data corresponding to the first target training data is an image. In this case, some image blocks in the image may be cropped, to obtain the first target training data including fewer pixels (in other words, including less image content). In addition, for an image obtained through cropping, a processing operation like rotation, zooming in, or zooming out may be performed on the image obtained through cropping, to improve diversity of the image.

In another possible implementation, the original training data is cropped, and content obtained through cropping is fused, to obtain the corresponding target training data.

For example, the second part of data includes second target training data, and the second target training data is obtained by fusing a plurality of parts of content obtained by cropping original training data corresponding to the second target training data. When the plurality of parts of content are fused, not all content obtained through cropping is fused, but some content is fused, so that a data amount of the obtained second target training data can be less than that of the corresponding original training data. In addition, there may be a plurality of manners of fusing, for example, a plurality of parts of content are directly spliced, or a plurality of parts of content are simply processed and then spliced. Optionally, in a process of splicing the plurality of parts of content, the plurality of parts of content may be spliced after a sequence of the plurality of parts of content is changed, or may be spliced in a sequence of the plurality of parts of content in the original training data.

For example, it is assumed that the original training data corresponding to the first target training data is a text, and text content of the original training data is specifically "Hello! How are you! I am fine, thank you! And you?". In this case, the text content of the original training data may be cropped into a plurality of parts: "Hello!", "How are you!", "I am fine, thank you!", and "And you?", and then some parts of the plurality of parts are spliced, to obtain the first target training data. For example, the text content of the first target training data is "Hello! I am fine, thank you! And you?".

In general, for the target training data obtained based on the original training data, the target training data includes at least a part of content in the corresponding original training data, or the target training data includes data obtained based on a part of content in the corresponding original training data.

In this solution, on one hand, original training data is processed to obtain target training data with a smaller data amount, and on the other hand, some original training data is used as target training data, so that multi-scale amplification can be performed on the original training data, to ensure scale diversity of finally obtained target training data. That the target training data is diversified in scale may mean that different pieces of target training data have different data amounts. For example, different texts have different lengths, different videos or voices have different time lengths, and different images have different sizes.

Step 503: Input the plurality of pieces of target training data into a classification model, to obtain a plurality of classification results corresponding to the plurality of pieces of target training data.

In this embodiment, the classification model may be an AI model that executes a binary classification task, and is used to perform classification prediction on input data of the classification model. In addition, a structure of the classification model may be determined based on a type of the input data of the classification model. This is not specifically limited in embodiments. For example, when the input data of the classification model is an image or a video, the structure of the classification model may specifically include a convolutional neural network; or when the input data of the classification model is a text or a voice, the structure of the classification model may specifically include an RNN or an attention network.

Therefore, after the plurality of pieces of target training data are separately input into the classification model, the classification model may predict a classification result corresponding to each piece of target training data, to obtain a plurality of classification results that are in one-to-one correspondence with the plurality of pieces of target training data. Each of the plurality of classification results indicates a category to which corresponding target training data belongs, to be specific, indicates that target training data belongs to user-generated data or AI-generated data.

Step 504: Update a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

After the classification result corresponding to each piece of target training data is obtained, a loss function may be constructed based on the plurality of classification results and a category label corresponding to the target training data, to update the first model based on a value of the constructed loss function, thereby implementing training of the first model. A manner of updating the first model based on the loss function value may be using a back propagation algorithm.

Generally, the loss function may be constructed based on a difference between a category label corresponding to target training data input to the classification model and a classification result actually output by the classification model.

It should be noted that, for the plurality of pieces of target training data that are input into the classification model, the part of target training data in the second part of data of the plurality of pieces of target training data does not have a category label, a data amount of the part of target training data is less than a preset threshold, and corresponding original training data is AI-generated. In other words, the part of target training data is data with a smaller data amount (for example, a short text, video, or voice, or an image that includes small content). Because the data amount of the part of target training data is smaller, even if the part of target training data is obtained by processing AI-generated original training data, the part of target training data is highly similar to user-generated data. Actually, it cannot be determined whether the part of target training data is AI-generated.

Therefore, in this embodiment, when the loss function value is calculated, the part of target training data in the second part of data needs to be considered as unlabeled data, to avoid directly marking the part of target training data as AI-generated data.

In addition, in the plurality of pieces of target training data, because the target training data in the first part of data is actually the subset of the plurality of pieces of original training data, the category label of the target training data in the first part of data remains unchanged. Another part of target training data in the second part of data is obtained based on corresponding original training data. Therefore, a category label of this part of target training data may be the same as a category label of the corresponding original training data. Simply speaking, if a category label of one piece of original training data is user-generated data, a category label of target training data that is obtained based on the original training data and whose data amount is greater than or equal to the preset threshold may also be user-generated data. If a category label of one piece of original training data is AI-generated data, a category label of target training data that is obtained based on the original training data and whose data amount is greater than or equal to the preset threshold may also be AI-generated data.

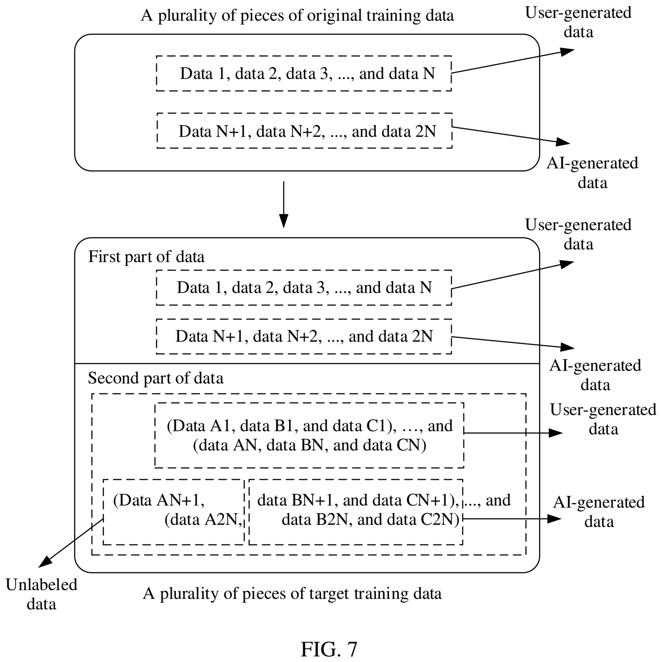

For example, refer to FIG. 7. FIG. 7 is a diagram of determining category labels of a plurality of pieces of target training data according to an embodiment of this application. As shown in FIG. 7, a plurality of pieces of original training data include 2N pieces of data in total: specifically, data 1, data 2, ..., and data 2N. In addition, category labels of the data 1 to the data N are all user-generated data, and category labels of the data N+1 to the data 2N are all AI-generated data.

Because a first part of data of the plurality of pieces of target training data also includes the data 1, the data 2, ..., and the data 2N, a category label of target training data in the first part of data remains unchanged. In other words, category labels of the data 1 to the data N are all user-generated data, and category labels of the data N+1 to the data 2N are all AI-generated data.

In addition, a second part of data of the plurality of pieces of target training data includes 2N groups of data, and data A1, data B1, and data C1 in a first group of data are all obtained by using the data 1 in the plurality of pieces of original training data. Data A2, data B2, and data C2 in a second group of data are all obtained by using the data 2 in the plurality of pieces of original training data, and so on. Data A2N, data B2N, and data C2N in a $2N^{th}$ group of data are all obtained by using the data 2N in the plurality of pieces of original training data. Because target training data in the first group of data to an Nth group of data is obtained by using the data 1 to the data N in the plurality of pieces of original training data, a category label of the target training data in the first group of data to the Nth group of data remains unchanged, that is, is user-generated. In addition, for a (N+1)th group of data to the 2N[th] group of data, category labels of original training data corresponding to the N groups of data are AI-generated data, and a data amount of the first piece of data (namely, data AN+1, data AN+2, ..., or data A2N) in each group of data is less than a preset threshold. Therefore, the first piece of data in each group of data in the (N+1)th group of data to the 2N[th] group of data is marked as unlabeled data, that is, does not have a category label. Other data whose data amount is not less than the preset threshold in the (N+1)th group of data to the 2N[th] group of data is marked as AI-generated data, in other words, a category label is the same as a category label of corresponding original training data.

In this solution, target training data with a smaller data amount is first generated based on original training data, to obtain training data of different scales, and ensure scale diversity of the training data. In addition, considering a characteristic of AI-generated data, for target training data that has a small data amount and that is originally AI-generated, this part of target training data is marked as unlabeled data, so that during training, a classification model can focus on data that is AI-generated and that is different from manually generated data, to avoid affecting perception of an AI-generated data style by the classification model when the data is marked as the AI-generated data, and effectively improve prediction accuracy of the classification model.

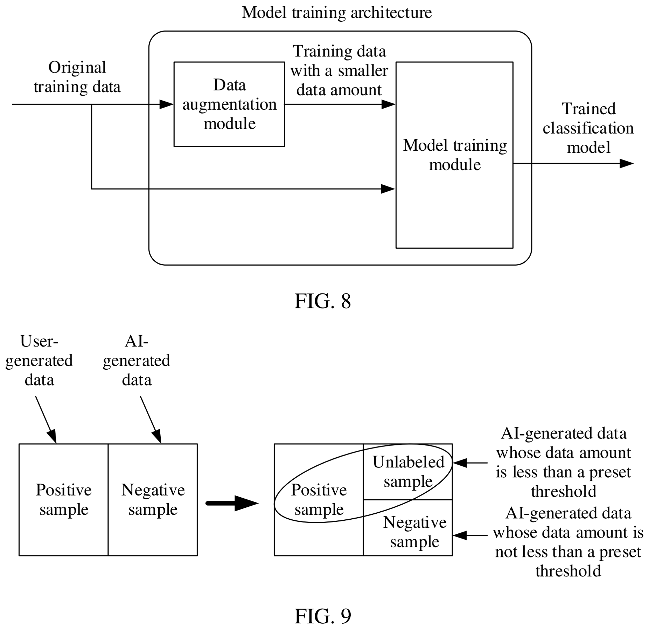

For example, refer to FIG. 8. FIG. 8 is a diagram of a classification model training procedure according to an embodiment of this application. As shown in FIG. 8, in a process of training a classification model, the classification model may be trained based on a model training architecture. The model training architecture includes a data augmentation module and a model training module. Original training data is input into the data augmentation module, so that the data augmentation module can process the original training data, to output training data (namely, the second part of data of the plurality of pieces of target training data in Step 502) whose data amount is smaller than that of the original training data. In other words, the data augmentation module is configured to perform Step 502. Then, both the original training data and the training data output by the data augmentation module are input into the model training module, and the model training module trains the classification model based on the input data, to obtain a trained classification model (namely, the second model). In other words, the model training module is configured to perform Step 503 and Step 504.

For ease of understanding, the following describes a specific process of obtaining a loss function value.

Optionally, the loss function value used to update the first model may be specifically obtained based on a first sub loss function value and a second sub loss function value.

The first sub loss function value is obtained based on a first difference and a second difference. The first difference is a difference between a classification result corresponding to target training data that does not have a category label and a category label assumed for the target training data. The second difference is a difference between a classification result corresponding to positive sample training data in the plurality of pieces of target training data and a category label assumed for the positive sample data. The category labels assumed for the target training data and the positive sample training data are both AI-generated data, and the positive sample training data includes target training data whose category label is user-generated data.

Simply speaking, the first sub loss function value may be understood as a positive-unlabeled (Positive-Unlabeled, PU) loss, and is obtained based on a positive sample (namely, target training data whose category label is user-generated data) and an unlabeled sample (namely, target training data that does not have a category label).

FIG. 9 is a diagram of division into a positive sample, an unlabeled sample, and a negative sample according to an embodiment of this application. As shown in FIG. 9, first, for a plurality of pieces of target training data obtained based on a plurality of pieces of original training data, target training data whose corresponding original training data is user-generated data is marked as a positive sample based on original training data corresponding to each piece of target training data, and target training data whose corresponding original training data is AI-generated data is marked as a negative sample. Then, the negative sample is divided into a part of target training data based on a data amount of the target training data, and the part of target training data is marked as an unlabeled sample. Specifically, in the originally marked negative sample, the target training data whose data amount is less than a preset threshold is re-marked as the unlabeled sample, and the target training data whose data amount is not less than the preset threshold is reserved and marked as a negative sample. Therefore, the unlabeled sample is actually AI-generated data whose data amount is less than the preset threshold, and the negative sample is AI-generated data whose data amount is not less than the preset threshold.

For example, a manner of calculating the first sub loss function value may be shown in Formula 1.

$$\widetilde{R}_{PU}(g) = \pi_P \widehat{R}_P^+(g) + \max\left(0, \widehat{R}_u^-(g) - \pi_P \widehat{R}_P^-(g)\right) \qquad \text{Formula (1)}$$

Herein, $\tilde{R}_{PU}(g)$ indicates the first sub loss function value (namely, a PU loss), $\pi_P$ indicates a ratio of a positive sample to a sum of the positive sample and an unlabeled sample, $\widehat{R}_P^+(g)$ indicates a difference value calculated based on a category label of the positive sample and a classification result corresponding to the positive sample, $\hat{Ru}(g)$ indicates a difference value calculated based on a category label (namely, AI-generated data) assumed for the unlabeled sample and a classification result corresponding to the unlabeled sample, and $\hat{R}_{\overline{P}}(g)$ indicates a difference value calculated based on a category label (namely, AI-generated data) assumed for the positive sample and a classification result corresponding to the positive sample.

In this solution, the target training data whose category label is user-generated data is considered as the positive sample, and the target training data that does not have a category label is considered as the unlabeled sample. In this way, a classification loss of a negative sample is estimated based on the positive sample and the unlabeled sample, so that during training, the classification model can focus on data that is AI-generated and that is different from manually generated data, to avoid affecting perception of an AI-generated data style by the classification model when the target training data that is AI-generated and whose data amount is small is directly marked as a negative sample, and effectively improve prediction accuracy of the classification model obtained through training.

In addition, the second sub loss function value is obtained based on a mean value of differences between the plurality of classification results and the category labels corresponding to the plurality of pieces of target training data. In addition, in a process of determining the second sub loss function value, a category label corresponding to the part of target training data is AI-generated data.

To be specific, when the second sub loss function value is calculated, a corresponding category label may also be assumed for the part of target training data that does not have a category label, and a loss function value is calculated based on the category label assumed for the part of target training data and a classification result corresponding to the part of target training data. It is assumed that the category label of the part of target training data that does not have a category label is also AI-generated data.

Simply speaking, the second sub loss function value may be understood as a positive-negative (Positive-negative, PN) loss, and is obtained based on a positive sample (namely, target training data whose category label is user-generated data) and a negative sample (namely, target training data whose category label is AI-generated data).

For example, a manner of calculating the second sub loss function value may be shown in Formula 2.

$$\widetilde{R}_{PN}(g) = E[\hat{R}_P^+(g) + \hat{R}_n^-(g)] \qquad \text{Formula (2)}$$

Herein, $\tilde{R}_{PN}(g)$ indicates the second sub loss function value (namely, a PN loss), $E[\cdot]$ indicates a total expected value of $(\hat{R}_P^+(g) + \hat{R}_n^-(g))$, $\hat{R}_P^+(g)$ indicates a difference value calculated based on a category label of the positive sample and a classification result corresponding to the positive sample, and $\hat{R}_n^-(g)$ indicates a difference value calculated based on a category label of the positive sample and a classification result corresponding to the positive sample.

After the first sub loss function value and the second sub loss function value are obtained, weighted summation may be performed on the first sub loss function value and the second sub loss function value to obtain a loss function value used to update the first model, and the first sub loss function value and the second sub loss function value correspond to different weights.

For example, a manner of calculating the loss function value based on the first sub loss function value and the second sub loss function value is shown in Formula 3.

$$\widetilde{R}_{PNU}(g) = \gamma\widetilde{R}_{PU}(g) + \widetilde{R}_{PN}(g) \qquad \text{Formula 3}$$

Herein, $\tilde{R}_{PNU}(g)$ indicates the loss function value, $\tilde{R}_{PU}(g)$ indicates the first sub loss function value, $\tilde{R}_{PN}(g)$ indicates the second sub loss function value, and $\gamma$ indicates a hyperparameter (namely, a weight corresponding to the first sub loss function value). In general, the PU loss is equivalent to a regularization item of PN classification, and can be used to correct a classification deviation of the classification model for the training data with a smaller data amount.

The foregoing describes the process of training the classification model. The following describes a process of classifying data based on the trained classification model.

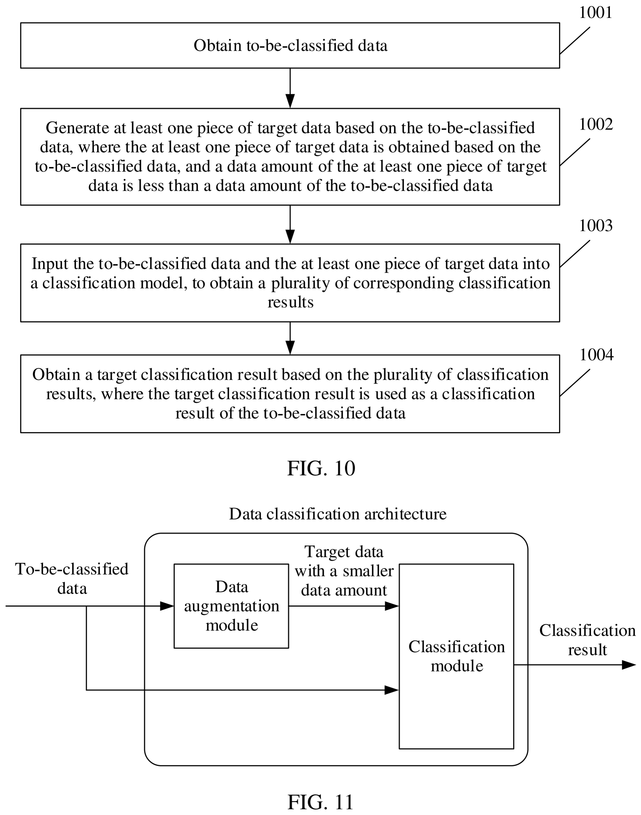

FIG. 10 is a schematic flowchart of a classification method according to an embodiment of this application. As shown in FIG. 10, the classification method includes Step 1001 to Step 1004.

Step 1001: Obtain to-be-classified data.

In this embodiment, the to-be-classified data may be any one of the following types: a text, an image, a video, and a voice. In addition, the to-be-classified data is data that needs to be classified, to be specific, it needs to be determined whether a category of the to-be-classified data is user-generated data or AI-generated data.

For example, in the news field, a news agency may receive a large quantity of news materials (for example, texts, images, videos, or voices) contributed by users. The news agency needs to classify the news materials to determine which of the news materials is user-generated and which is AI-generated, to further verify authenticity of the news materials.

Step 1002: Generate at least one piece of target data based on the to-be-classified data, where the at least one piece of target data is obtained based on the to-be-classified data, and a data amount of the at least one piece of target data is less than a data amount of the to-be-classified data.

In this embodiment, there may be a plurality of manners of generating target data based on the to-be-classified data, and in each manner, it needs to be ensured that a data amount of the generated target data is less than the data amount of the to-be-classified data, in other words, content included in the target data is less than content included in the to-be-classified data. In addition, each of the at least one piece of target data is obtained based on a part of content of the to-be-classified data.

Optionally, different pieces of target data have different data amounts in the at least one piece of target data. To be specific, when a plurality of pieces of target data are generated based on the to-be-classified data, the plurality of pieces of generated target data have different data amounts, to ensure data scale diversity. For example, when the to-be-classified data is text data, a plurality of texts with different lengths may be generated as the target data.

In a possible implementation, corresponding target data may be obtained by cropping the to-be-classified data, and the target data includes only a part of content of the to-be-classified data. For example, the at least one piece of target data includes first target data, and the first target data is obtained by cropping some content of the to-be-classified data.

In another possible implementation, the to-be-classified data may be cropped, and content obtained through cropping is fused to obtain the corresponding target data. For example, the at least one piece of target data includes second target data, and the second target data is obtained by fusing a plurality of parts of content obtained by cropping the to-be-classified data.

The manner of generating the target data based on the to-be-classified data is similar to the manner of generating the target training data based on the original training data in Step 502. For details, refer to the descriptions of Step 502. Details are not described herein again.

In general, for the target data obtained based on the to-be-classified data, the target data includes at least a part of content in the to-be-classified data, or the target data includes data obtained based on a part of content in the to-be-classified data.

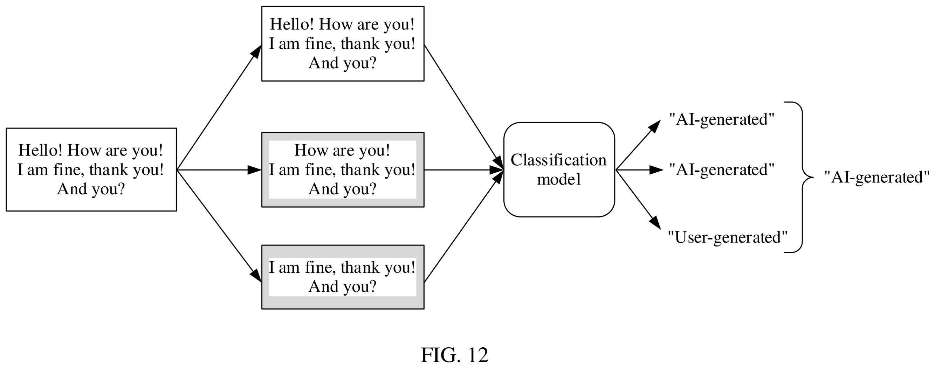

For example, refer to FIG. 11 and FIG. 12. FIG. 11 is a diagram of a data classification architecture according to an embodiment of this application. FIG. 12 is a schematic flowchart of data classification according to an embodiment of this application. As shown in FIG. 11, the classification method in embodiments may be implemented based on the data classification architecture, and the data classification architecture includes a data augmentation module and a classification module. The data augmentation module is configured to perform Step 1002. To be specific, an input of the data augmentation module is the to-be-classified data, and an output of the data augmentation module is one or more pieces of target data that have a smaller data amount than the to-be-classified data.

As shown in FIG. 12, it is assumed that the to-be-classified data is a text, and text content of the to-be-classified data is specifically "Hello! How are you! I am fine, thank you! And you?". In this case, two pieces of target data may be generated based on the to-be-classified data, and text content of the two pieces of target data is respectively "How are you! I am fine, thank you! And you?" and "I am fine, thank you! And you?".

Step 1003: Input the to-be-classified data and the at least one piece of target data into a classification model, to obtain a plurality of corresponding classification results.

In this embodiment, the classification model may be specifically a model (namely, the second model in Step 504) obtained through training based on the foregoing classification model training method. The classification model can be used to classify input data, to determine a category to which the input data belongs.

Therefore, in this embodiment, after the to-be-classified data and the at least one piece of target data are separately input into the classification model, the classification model can output a classification result corresponding to each piece of input data, to obtain the plurality of classification results. The plurality of classification results correspond to the to-be-classified data and the at least one piece of target data. In addition, each classification result indicates that the input data belongs to one of "user-generated data" and "AI-generated data".

As shown in FIG. 12, after the to-be-classified data and the two pieces of target data are input into the classification model, the classification model outputs classification results corresponding to the to-be-classified data and the two pieces of target data. A classification result corresponding to the to-be-classified data is "AI-generated data", a classification result corresponding to the first piece of target data is "AI-generated data", and a classification result corresponding to the second piece of target data is "user-generated data".

Step 1004: Obtain a target classification result based on the plurality of classification results, where the target classification result is used as a classification result of the to-be-classified data.

When the plurality of classification results are obtained based on the classification model, the target classification result may be obtained by combining the plurality of classification results, and the target classification result is used as a final classification result of the to-be-classified data.

In this solution, the to-be-classified data is amplified to obtain a plurality of pieces of target data with a smaller data amount, the to-be-classified data and the target data are input to the classification model for classification, and the plurality of classification results output by the classification model are integrated, to obtain a final target classification result of the to-be-classified data. Therefore, a decision of the classification model can be strengthened in a multi-scale perspective, to improve data classification accuracy.

There may be a plurality of manners of obtaining the target classification result based on the plurality of classification results.

In a possible implementation, weighted summation may be performed on the plurality of classification results, to obtain the target classification result. Weights corresponding to the classification results may be the same, or may be different.

Optionally, a weight of each of the plurality of classification results is related to a data amount of model input data corresponding to each classification result. For example, there is a positive correlation between a weight of each classification result and a data amount of model input data corresponding to each classification result. That is, a larger data amount of the model input data indicates a larger weight of a classification result corresponding to the model input data. In this way, a classification result corresponding to to-be-classified data with a largest data amount can have a maximum weight, so that in a process of determining the target classification result, more attention is paid to a classification result corresponding to original to-be-classified data.

It should be noted that, in a process of performing weighted summation on the plurality of classification results, weighted summation may be directly performed on classification categories (for example, "user-generated data" or "AI-generated data") indicated by the plurality of classification results. For example, in FIG. 12, the first two classification results output by the classification model are both "AI-generated data", and the next classification result is "user-generated data". When a same weight is assigned to each classification result, weighted summation may be performed on classification results of all types, to determine "AI-generated data" with a larger sum value as a final target classification result.

In addition, because the classification model actually outputs a category corresponding to each category when determining a classification result, each classification result actually includes a prediction probability of each category. Therefore, when weighted summation is performed on the plurality of classification results, weighted summation may be performed on the prediction probability of each category in each classification result, to determine a category with a maximum summation value as the final target classification result. For example, it is assumed that the classification model outputs three classification results. A prediction probability of the first classification result for two categories "user-generated data" and "AI-generated data" is (0.8, 0.2), a prediction probability of the second classification result for the two categories "user-generated data" and "AI-generated data" is (0.7, 0.3), and a prediction probability of the third classification result for the two categories of "user-generated data" and "AI-generated data" is (0.4, 0.6). In this case, when weights of the three classification results are respectively 0.5, 0.3, and 0.2, a weighted summation value corresponding to the category "user-generated data" is "$0.5 \times 0.8 + 0.3 \times 0.7 + 0.2 \times 0.4 = 0.69$", and a weighted summation value corresponding to the category "AI-generated data" is "$0.5 \times 0.2 + 0.3 \times 0.3 + 0.2 \times 0.6 = 0.31$". It is clear that the weighted summation value corresponding to the category "user-generated data" is greater than the weighted summation value corresponding to the category "AI-generated data". Therefore, it may be determined that the target classification result is "user-generated data".

In another possible implementation, the target classification result may be determined based on a proportion of each classification result type in the plurality of classification results. For example, if a classification result type accounts for a highest proportion in the plurality of classification results, the classification result type is determined as the target classification result. For example, it is assumed that the classification model outputs five classification results in total, where three classification results are all "user-generated data", and the other two classification results are "AI-generated data". This indicates that a classification result of the "user-generated data" type accounts for a highest proportion in the plurality of classification results. Therefore, the "user-generated data" is used as the target classification result.

Text classification is used as an example. Through experiment comparison, the classification method provided in embodiments of this application can have higher prediction accuracy on various corpuses than a classification method in a related technology. Details are shown in Table 1.

Table 1

|  | Prediction accuracy for a short text | Prediction accuracy for a combination of long and short texts |
|---|---|---|
| Related technology | 0.3352 | 0.7360 |
| Method provided in this embodiment of this application | 0.8952 | 0.9336 |

It can be learned from Table 1 that, in terms of prediction accuracy of a corpus like a short text and a combination of

18

long and short texts, the classification method provided in this embodiment of this application has higher prediction accuracy.

The foregoing describes in detail the methods provided in embodiments of this application. The following describes a device that is provided in embodiments of this application and that is configured to perform the foregoing methods.

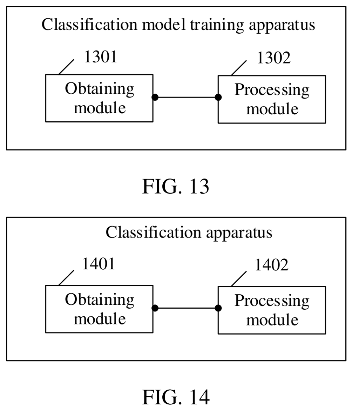

FIG. 13 is a diagram of a structure of a classification model training apparatus according to an embodiment of this application. As shown in FIG. 13, the classification model training apparatus includes:

an obtaining module 1301, configured to obtain a plurality of pieces of original training data, where a category label corresponding to each of the plurality of pieces of original training data is user-generated data or AI-generated data; and

a processing module 1302, configured to obtain a plurality of pieces of target training data based on the plurality of pieces of original training data, where a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data, where

the processing module 1302 is further configured to input the plurality of pieces of target training data into a classification model, to obtain a plurality of classification results corresponding to the plurality of pieces of target training data; and

the processing module 1302 is further configured to update a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

In a possible implementation, target training data in the second part of data is obtained based on a part of content of corresponding original training data.

In a possible implementation, the second part of data includes first target training data, and the first target training data is obtained by cropping a part of content of original training data corresponding to the first target training data.

In a possible implementation, the second part of data includes second target training data, and the second target training data is obtained by fusing a plurality of parts of content obtained by cropping original training data corresponding to the second target training data.

In a possible implementation, a data type of the plurality of pieces of original training data is any one of the following types: a text, an image, a video, and a voice.

In a possible implementation, the loss function value is obtained based on a first sub loss function value, the first sub loss function value is obtained based on a first difference and a second difference, the first difference is a difference between a classification result corresponding to the part of target training data and a category label assumed for the target training data, and the second difference is a difference between a classification result corresponding to positive sample training data in the plurality of pieces of target training data and a category label assumed for the positive sample data, where

the category labels assumed for the target training data and the positive sample training data are both AI-generated data, and the positive sample training data includes target training data whose category label is user-generated data.

In a possible implementation, the loss function value is further obtained based on a second sub loss function value, and the second sub loss function value is obtained based on a mean value of differences between the plurality of classification results and the category labels corresponding to the plurality of pieces of target training data, where in a process of determining the second sub loss function value, a category label corresponding to the part of target training data is AI-generated data.

In a possible implementation, the loss function value is obtained by performing weighted summation on the first sub loss function value and the second sub loss function value, and the first sub loss function value and the second sub loss function value correspond to different weights.

FIG. 14 is a diagram of a structure of a classification apparatus according to an embodiment of this application. As shown in FIG. 14, the classification apparatus includes:

an obtaining module 1401, configured to obtain to-be-classified data; and

a processing module 1402, configured to generate at least one piece of target data based on the to-be-classified data, where the at least one piece of target data is obtained based on the to-be-classified data, and a data amount of the at least one piece of target data is less than a data amount of the to-be-classified data, where

the processing module 1402 is further configured to input the to-be-classified data and the at least one piece of target data into a classification model, to obtain a plurality of corresponding classification results; and

the processing module 1402 is further configured to obtain a target classification result based on the plurality of classification results, where the target classification result is used as a classification result of the to-be-classified data.

In a possible implementation, the processing module 1402 is further configured to perform weighted summation on the plurality of classification results to obtain the target classification result.

In a possible implementation, a weight of each classification result in the plurality of classification results is related to a data amount of model input data corresponding to the classification result.

In a possible implementation, different pieces of target data have different data amounts in the at least one piece of target data.

In a possible implementation, each of the at least one piece of target data is obtained based on a part of content of the to-be-classified data.

In a possible implementation, the at least one piece of target data includes first target data, and the first target data is obtained by cropping some content of the to-be-classified data.

In a possible implementation, the at least one piece of target data includes second target data, and the second target data is obtained by fusing a plurality of parts of content obtained by cropping the to-be-classified data.

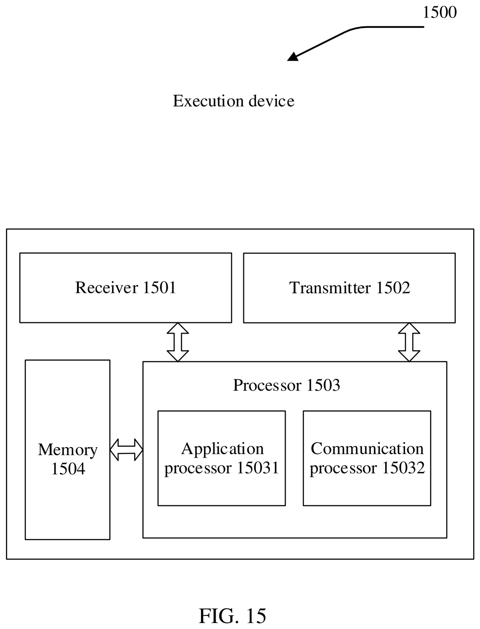

FIG. 15 is a diagram of a structure of an execution device according to an embodiment of this application. An execution device 1500 may be specifically represented as a mobile phone, a tablet computer, a notebook computer, an intelligent wearable device, a server, or the like. This is not limited herein. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device. During specific application, components of the execution device are coupled together through a bus system. In addition to a data bus, the bus system may include a power bus, a control bus, a status signal bus, and the like. However, for clear description, various types of buses in the figure are referred as the bus system.

The methods disclosed in embodiments of this application may be applied to the processor 1503, or be implemented by the processor 1503. The processor 1503 may be an integrated circuit chip, and has a signal processing capability. In an implementation process, steps in the foregoing methods may be implemented by using a hardware integrated logical circuit in the processor 1503, or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field-programmable gate array (field-programmable gate array, FPGA) or another programmable logic device, a discrete gate or a transistor logic device, or a discrete hardware component.

The processor 1503 may implement or perform the methods, the steps, and logical block diagrams that are disclosed in embodiments of this application. The general-purpose processor may be a microprocessor, or may be any conventional processor, or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

The receiver 1501 may be configured to: receive input digital or character information, and generate a signal input related to a related setting and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

An electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the model structure determining method described in the foregoing embodiments, or a chip in a training device performs the model structure determining method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

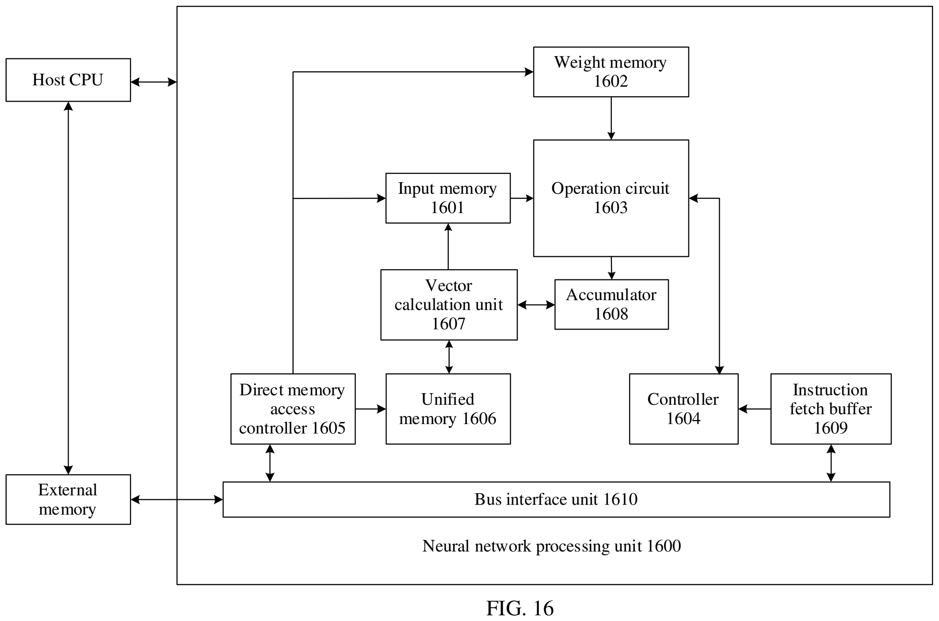

Specifically, FIG. 16 is a diagram of a structure of a chip according to an embodiment of this application. The chip may be represented as a neural network processing unit NPU 1600. The NPU 1600 is mounted to a host CPU (Host CPU) as a coprocessor, and a task is allocated by the host CPU. A core part of the NPU is an operation circuit 1603. The operation circuit 1603 is controlled by a controller 1604 to extract matrix data in a memory and perform a multiplication operation.

In some implementations, the operation circuit 1603 internally includes a plurality of processing units (Process Engine, PE). In some implementations, the operation circuit 1603 is a two-dimensional systolic array. The operation circuit 1603 may be alternatively a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602, and buffers the data on each PE in the operation circuit. The operation circuit fetches data of the matrix A from an input memory 1601, to perform a matrix operation with the matrix B to obtain a partial result or a final result of a matrix, and stores the result into an accumulator (accumulator) 1608.

A unified memory 1606 is configured to store input data and output data. Weight data is directly transferred to the weight memory 1602 by using a direct memory access controller (Direct Memory Access Controller, DMAC) 1605. The input data is also transferred to the unified memory 1606 by using the DMAC.

A BIU is a bus interface unit, namely, a bus interface unit 1610, and is configured to perform interaction between an AXI bus, and the DMAC and an instruction fetch buffer (Instruction Fetch Buffer, IFB) 1609.

The bus interface unit 1610 (Bus Interface Unit, BIU) is used by the instruction fetch buffer 1609 to obtain instructions from an external memory, and is further used by the direct memory access controller 1605 to obtain original data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector calculation unit 1607 includes a plurality of operation processing units. If needed, further processing, for example, vector multiplication, vector addition, an exponential operation, a logarithm operation, or size comparison, is performed on an output of the operation circuit 1603. The vector calculation unit 1607 is mainly configured to perform network calculation at a non-convolutional/fully connected layer in a neural network, for example, batch normalization (Batch Normalization), pixel-level summation, and up-sampling on a feature map.

In some implementations, the vector calculation unit 1607 can store a processed output vector in the unified memory 1606. For example, the vector calculation unit 1607 may apply a linear function or a non-linear function to the output of the operation circuit 1603, for example, perform linear interpolation on a feature map extracted at a convolutional layer, and for another example, accumulate vectors of values to generate an activation value. In some implementations, the vector calculation unit 1607 generates a normalized value, a pixel-level summation value, or both a normalized value and a pixel-level summation value. In some implementations, the processed output vector can be used as an activation input to the operation circuit 1603, for example, the processed output vector is used in a subsequent layer in the neural network.

The instruction fetch buffer (instruction fetch buffer) 1609 connected to the controller 1604 is configured to store instructions used by the controller 1604.

The unified memory 1606, the input memory 1601, the weight memory 1602, and the instruction fetch buffer 1609 are all on-chip memories. The external memory is private to a hardware architecture of the NPU.

Any one of the processors mentioned above may be a general-purpose central processing unit, a microprocessor, an ASIC, or one or more integrated circuits for controlling program execution.

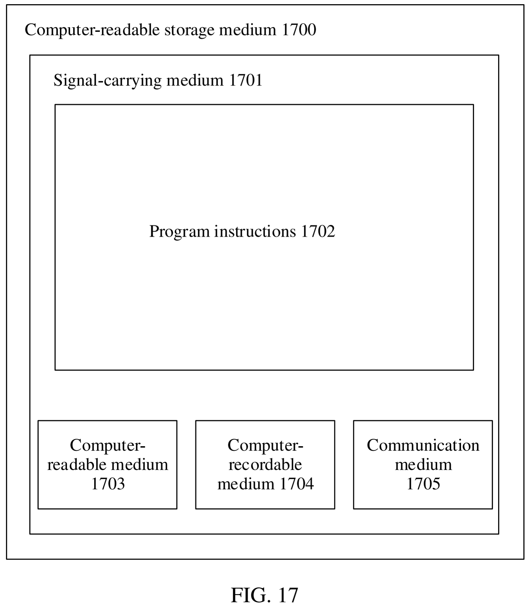

FIG. 17 is a diagram of a structure of a computer-readable storage medium according to an embodiment of this application. This application further provides a computer-readable storage medium. In some embodiments, the method disclosed in FIG. 5 may be implemented as computer program instructions encoded in a machine-readable format on the computer-readable storage medium or encoded in another non-transitory medium or product.

FIG. 17 schematically shows a conceptual partial view of an example computer-readable storage medium arranged according to at least some embodiments shown herein. The example computer-readable storage medium includes a computer program for executing a computer process on a computing device.

In an embodiment, a computer-readable storage medium 1700 is provided by using a signal-carrying medium 1701. The signal-carrying medium 1701 may include one or more program instructions 1702, and when one or more program instructions 1702 are run by one or more processors, the foregoing functions or some functions described in FIG. 5 may be provided.

In some examples, the signal-carrying medium 1701 may include a computer-readable medium 1703, for example but not limited to, a hard disk drive, a compact disc (CD), a digital video disc (DVD), a digital tape, a memory, a ROM, or a RAM.

In some implementations, the signal-carrying medium 1701 may include a computer-recordable medium 1704, for example but not limited to, a memory, a read/write (R/W) CD, or an R/W DVD. In some implementations, the signal-carrying medium 1701 may include a communication medium 1705, for example but not limited to, digital and/or analog communication medium (for example, an optical fiber, a waveguide, a wired communication link, or a wireless communication link). Therefore, for example, the signal-carrying medium 1701 may communicate by the communication medium 1705 in a wireless form (for example, a wireless communication medium that complies with the IEEE 802.11 standard or another transmission protocol).

The one or more program instructions 1702 may be, for example, a computer-executable instruction or a logic implementation instruction. In some examples, a computing device may be configured to provide various operations, functions, or actions in response to the program instructions 1702 transmitted to the computing device by using one or more of the computer-readable medium 1703, the computer-recordable medium 1704, and/or the communication medium 1705.

In addition, it should be noted that the apparatus embodiments described above are merely examples. The units described as separate parts may or may not be physically separate, and parts displayed as units may or may not be physical units, that is, may be located at one position, or may be distributed on a plurality of network units. A part or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When the software is used to implement the embodiments, all or a part of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A classification model training method, comprising:

obtaining a plurality of pieces of original training data, wherein a category label corresponding to each of the plurality of pieces of original training data is user-generated data or artificial intelligence AI-generated data;

obtaining a plurality of pieces of target training data based on the plurality of pieces of original training data, wherein a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data;

inputting the plurality of pieces of target training data into a classification model, to obtain a plurality of classification results corresponding to the plurality of pieces of target training data; and

updating the first model based on a loss function value, to obtain a second model, wherein the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

2. The method according to claim 1, wherein target training data in the second part of data is obtained based on a part of content of corresponding original training data.

3. The method according to claim 1 or 2, wherein the second part of data comprises first target training data, and the first target training data is obtained by cropping a part of content of original training data corresponding to the first target training data.

4. The method according to any one of claims 1 to 3, wherein the second part of data comprises second target training data, and the second target training data is obtained by fusing a plurality of parts of content obtained by cropping original training data corresponding to the second target training data.

5. The method according to any one of claims 1 to 4, wherein a data type of the plurality of pieces of original training data is any one of the following types: a text, an image, a video, and a voice.

6. The method according to any one of claims 1 to 5, wherein the loss function value is obtained based on a first sub loss function value, the first sub loss function value is obtained based on a first difference and a second difference, the first difference is a difference between a classification result corresponding to the part of target training data and a category label assumed for the target training data, and the second difference is a difference between a classification result corresponding to positive sample training data in the plurality of pieces of target training data and a category label assumed for the positive sample data, wherein

the category labels assumed for the target training data and the positive sample training data are both AI-generated data, and the positive sample training data comprises target training data whose category label is user-generated data.

7. The method according to claim 6, wherein the loss function value is further obtained based on a second sub loss function value, and the second sub loss function value is obtained based on a mean value of differences between the plurality of classification results and the category labels corresponding to the plurality of pieces of target training data, wherein

in a process of determining the second sub loss function value, a category label corresponding to the part of target training data is AI-generated data.

8. The method according to claim 7, wherein the loss function value is obtained by performing weighted summation on the first sub loss function value and the second sub loss function value, and the first sub loss function value and the second sub loss function value correspond to different weights.

9. A classification method, comprising:

obtaining to-be-classified data;

generating at least one piece of target data based on the to-be-classified data, wherein the at least one piece of target data is obtained based on the to-be-classified data, and a data amount of the at least one piece of target data is less than a data amount of the to-be-classified data;

inputting the to-be-classified data and the at least one piece of target data into a classification model, to obtain a plurality of corresponding classification results; and

obtaining a target classification result based on the plurality of classification results, wherein the target classification result is used as a classification result of the to-be-classified data.

10. The method according to claim 9, wherein the obtaining a target classification result based on the plurality of classification results comprises:

performing weighted summation on the plurality of classification results to obtain the target classification result.

11. The method according to claim 10, wherein a weight of each classification result in the plurality of classification results is related to a data amount of model input data corresponding to the classification result.

12. The method according to any one of claims 9 to 11, wherein different pieces of target data have different data amounts in the at least one piece of target data.

13. The method according to any one of claims 9 to 12, wherein each of the at least one piece of target data is obtained based on a part of content of the to-be-classified data.

14. The method according to any one of claims 9 to 13, wherein the at least one piece of target data comprises first target data, and the first target data is obtained by cropping some content of the to-be-classified data.

15. The method according to any one of claims 9 to 14, wherein the at least one piece of target data comprises second target data, and the second target data is obtained by fusing a plurality of parts of content obtained by cropping the to-be-classified data.

16. A classification model training apparatus, comprising:

an obtaining module, configured to obtain a plurality of pieces of original training data, wherein a category label corresponding to each of the plurality of pieces of original training data is user-generated data or AI-generated data; and

a processing module, configured to obtain a plurality of pieces of target training data based on the plurality of pieces of original training data, wherein a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data, wherein

the processing module is further configured to input the plurality of pieces of target training data into a classification model, to obtain a plurality of classification results corresponding to the plurality of pieces of target training data; and

the processing module is further configured to update the first model based on a loss function value, to obtain a second model, wherein the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated.

17. The apparatus according to claim 16, wherein target training data in the second part of data is obtained based on a part of content of corresponding original training data.

18. The apparatus according to claim 16 or 17, wherein the second part of data comprises first target training data, and the first target training data is obtained by cropping a part of content of original training data corresponding to the first target training data.

19. The apparatus according to any one of claims 16 to 18, wherein the second part of data comprises second target training data, and the second target training data is obtained by fusing a plurality of parts of content obtained by cropping original training data corresponding to the second target training data.

20. A classification apparatus, comprising:

an obtaining module, configured to obtain to-be-classified data; and

a processing module, configured to generate at least one piece of target data based on the to-be-classified data, wherein the at least one piece of target data is obtained based on the to-be-classified data, and a data amount of the at least one piece of target data is less than a data amount of the to-be-classified data, wherein
the processing module is further configured to input the to-be-classified data and the at least one piece of target data into a classification model, to obtain a plurality of corresponding classification results; and
the processing module is further configured to obtain a target classification result based on the plurality of classification results, wherein the target classification result is used as a classification result of the to-be-classified data.

21. The apparatus according to claim 20, wherein the processing module is further configured to perform weighted summation on the plurality of classification results to obtain the target classification result.

22. The apparatus according to claim 21, wherein a weight of each classification result in the plurality of classification results is related to a data amount of model input data corresponding to the classification result.

23. The apparatus according to any one of claims 20 to 22, wherein different pieces of target data have different data amounts in the at least one piece of target data.

24. The apparatus according to any one of claims 20 to 23, wherein each of the at least one piece of target data is obtained based on a part of content of the to-be-classified data.

25. The apparatus according to any one of claims 20 to 24, wherein the at least one piece of target data comprises first target data, and the first target data is obtained by cropping some content of the to-be-classified data.

26. The apparatus according to any one of claims 20 to 25, wherein the at least one piece of target data comprises second target data, and the second target data is obtained by fusing a plurality of parts of content obtained by cropping the to-be-classified data.

27. A classification model training apparatus, comprising a memory and a processor, wherein the memory stores code, the processor is configured to execute the code, and when the code is executed, the apparatus performs the method according to any one of claims 1 to 8.

28. A classification apparatus, comprising a memory and a processor, wherein the memory stores code, the processor is configured to execute the code, and when the code is executed, the apparatus performs the method according to any one of claims 9 to 15.

29. A computer storage medium, wherein the computer storage medium stores instructions, and when the instructions are executed on a computer, the computer is enabled to implement the method according to any one of claims 1 to 15.

30. A computer program product, wherein the computer program product stores instructions, and when the instructions are executed on a computer, the computer is enabled to implement the method according to any one of claims 1 to 15.

FIG. 1

FIG. 2

300

Execution device 210

Data storage system 250

Communication network

Local device 301

Local device 302

For example

FIG. 3

FIG. 4

EP 4 685 673 A1

| Obtain a plurality of pieces of original training data, where a category label corresponding to each of the plurality of pieces of original training data is user-generated data or AI-generated data | 501 |

| Obtain a plurality of pieces of target training data based on the plurality of pieces of original training data, where a first part of data of the plurality of pieces of target training data belongs to the plurality of pieces of original training data, each piece of target training data in a second part of data of the plurality of pieces of target training data is obtained based on corresponding original training data in the plurality of pieces of original training data, and a data amount of each piece of target training data is less than a data amount of the corresponding original training data | 502 |

| Input the plurality of pieces of target training data into a classification model, to obtain a plurality of classification results corresponding to the plurality of pieces of target training data | 503 |

| Update a first model based on a loss function value, to obtain a second model, where the loss function value is obtained based on the plurality of classification results and category labels corresponding to the plurality of pieces of target training data, a part of target training data in the second part of data does not have a category label, a data amount of the part of target training data is less than a preset threshold, and corresponding original training data of the part of target training data is AI-generated | 504 |

FIG. 5

A plurality of pieces of original training data

Data 1, data 2, data 3, ..., and data N,

data N+1, data N+2, ..., and data 2N

First part of data

Data 1, data 2, data 3, ..., and data N

Second part of data

Data N+1', data N+2', ..., and data 2N'

A plurality of pieces of target training data

FIG. 6A

A plurality of pieces of original training data

Data 1, data 2, data 3, ..., and data N,
data N+1, data N+2, ..., and data 2N

First part of data

Data 1, data 2, data 3, ..., and data N,
data N+1, data N+2, ..., and data 2N

Second part of data

(Data A1, data B1, and data C1),
(data A2, data B2, and data C2), ..., and
(data A2N, data B2N, and data C2N)

A plurality of pieces of target training data

FIG. 6B

A plurality of pieces of original training data

User-generated data

```
Data 1, data 2, data 3, ..., and data N
```

```
Data N+1, data N+2, ..., and data 2N
```

AI-generated data

User-generated data

First part of data

```
Data 1, data 2, data 3, ..., and data N
```

```
Data N+1, data N+2, ..., and data 2N
```

AI-generated data

Second part of data

User-generated data

```
(Data A1, data B1, and data C1), …, and
(data AN, data BN, and data CN)
```

```
(Data AN+1,          data BN+1, and data CN+1), ..., and
       (data A2N,          data B2N, and data C2N)
```

AI-generated data

Unlabeled data

A plurality of pieces of target training data

FIG. 7

Model training architecture

Original training data → Data augmentation module → Training data with a smaller data amount → Model training module → Trained classification model

**FIG. 8**

User-generated data

AI-generated data

Positive sample | Negative sample

Positive sample | Unlabeled sample / Negative sample

AI-generated data whose data amount is less than a preset threshold

AI-generated data whose data amount is not less than a preset threshold

**FIG. 9**

```
┌─────────────────────────────────────────────────────────┐
│              Obtain to-be-classified data               │  1001
└─────────────────────────────────────────────────────────┘
                            │
                            ▼
┌─────────────────────────────────────────────────────────┐
│ Generate at least one piece of target data based on the  │  1002
│ to-be-classified data, where the at least one piece of   │
│ target data is obtained based on the to-be-classified    │
│ data, and a data amount of the at least one piece of     │
│ target data is less than a data amount of the            │
│ to-be-classified data                                    │
└─────────────────────────────────────────────────────────┘
                            │
                            ▼
┌─────────────────────────────────────────────────────────┐
│ Input the to-be-classified data and the at least one     │  1003
│ piece of target data into a classification model, to     │
│ obtain a plurality of corresponding classification       │
│ results                                                  │
└─────────────────────────────────────────────────────────┘
                            │
                            ▼
┌─────────────────────────────────────────────────────────┐
│ Obtain a target classification result based on the       │  1004
│ plurality of classification results, where the target    │
│ classification result is used as a classification result │
│ of the to-be-classified data                             │
└─────────────────────────────────────────────────────────┘
```

FIG. 10

Data classification architecture

FIG. 11

Hello! How are you!
I am fine, thank you!
And you?

Hello! How are you!
I am fine, thank you!
And you?

How are you!
I am fine, thank you!
And you?

I am fine, thank you!
And you?

Classification
model

"AI-generated"

"AI-generated"

"User-generated"

"AI-generated"

FIG. 12

Classification model training apparatus

1301

Obtaining module

1302

Processing module

FIG. 13

Classification apparatus

1401

Obtaining module

1402

Processing module

FIG. 14

1500

Execution device

| Receiver 1501 | Transmitter 1502 |

Processor 1503

| Application processor 15031 | Communication processor 15032 |

Memory 1504

FIG. 15

```
┌─────────────┐                    ┌──────────────────┐
│  Host CPU   │◄──────────────────►│  Weight memory   │
└─────────────┘                    │      1602        │
                                   └──────────────────┘
                                            │
                                            ▼
                      ┌────────────┐  ┌──────────────────┐
                      │Input memory│─►│Operation circuit │
                      │   1601     │  │      1603        │
                      └────────────┘  └──────────────────┘
                            ▲                 │
                      ┌──────────────┐  ┌──────────────┐
                      │    Vector    │  │ Accumulator  │
                      │calculation   │◄►│    1608      │
                      │  unit 1607   │  └──────────────┘
                      └──────────────┘
```

Direct memory access controller 1605

Unified memory 1606

Controller 1604

Instruction fetch buffer 1609

External memory

Bus interface unit 1610

Neural network processing unit 1600

FIG. 16

Computer-readable storage medium 1700

Signal-carrying medium 1701

Program instructions 1702

| Computer-readable medium 1703 | Computer-recordable medium 1704 | Communication medium 1705 |
| --- | --- | --- |

FIG. 17

## INTERNATIONAL SEARCH REPORT

| International application No. |
| --- |
| **PCT/CN2024/072506** |

| A. | CLASSIFICATION OF SUBJECT MATTER |
| --- | --- |

G06F18/214(2023.01)i; G06F18/24(2023.01)i; G06F18/25(2023.01)i; G06N3/0464(2023.01)i; G06N3/0442(2023.01)i; G06N3/045(2023.01)i; G06N3/048(2023.01)i; G06N3/084(2023.01)i

According to International Patent Classification (IPC) or to both national classification and IPC

| B. | FIELDS SEARCHED |
| --- | --- |

Minimum documentation searched (classification system followed by classification symbols)

IPC: G06F, G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 模型, 训练, 人工智能, 真实, 小于, 少于, 低于, 不大于, 不超过, 裁剪, 减少, 缩, 分类, 生成, model, train, AI, real, less, small, crop, cut, trim, decrease, class, category, generate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116401552 A (HUAWEI TECHNOLOGIES CO., LTD.) 07 July 2023 (2023-07-07) claims 1-30 | 1-30 |
| A | CN 110929780 A (TENCENT TECHNOLOGY (SHENZHEN) CO., LTD.) 27 March 2020 (2020-03-27) description, paragraphs 47-159 | 1-30 |
| A | CN 112016633 A (BEIJING BAIDU NETCOM SCIENCE AND TECHNOLOGY CO., LTD.) 01 December 2020 (2020-12-01) entire document | 1-30 |
| A | CN 111814810 A (GUANGDONG OPPO MOBILE TELECOMMUNICATIONS CORP., LTD.) 23 October 2020 (2020-10-23) entire document | 1-30 |
| A | US 2021365714 A1 (INTERNATIONAL BUSINESS MACHINES CORP.) 25 November 2021 (2021-11-25) entire document | 1-30 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 March 2024** | **03 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/072506** |

### C. DOCUMENTS CONSIDERED TO BE RELEVANT

| Category* | Citation of document, with indication, where appropriate, of the relevant passages | Relevant to claim No. |
| --- | --- | --- |
| A | US 2021097382 A1 (MCAFEE, LLC) 01 April 2021 (2021-04-01) <br> entire document | 1-30 |
| A | WO 2022227207 A1 (PING AN TECHNOLOGY (SHENZHEN) CO., LTD.) 03 November 2022 (2022-11-03) <br> entire document | 1-30 |
| A | CN 115578739 A (SHANGHAI LAIYE BOTE NETWORK TECHNOLOGY CO., LTD. et al.) 06 January 2023 (2023-01-06) <br> entire document | 1-30 |

Form PCT/ISA/210 (second sheet) (July 2022)

## INTERNATIONAL SEARCH REPORT
### Information on patent family members

International application No.

**PCT/CN2024/072506**

| Patent document cited in search report | | | Publication date (day/month/year) | Patent family member(s) | | | Publication date (day/month/year) |
|---|---|---|---|---|---|---|---|
| CN | 116401552 | A | 07 July 2023 | None | | | |
| CN | 110929780 | A | 27 March 2020 | US | 2022058396 | A1 | 24 February 2022 |
| | | | | WO | 2021098362 | A1 | 27 May 2021 |
| | | | | EP | 3989121 | A1 | 27 April 2022 |
| | | | | EP | 3989121 | A4 | 03 August 2022 |
| CN | 112016633 | A | 01 December 2020 | None | | | |
| CN | 111814810 | A | 23 October 2020 | WO | 2022033150 | A1 | 23 October 2020 |
| US | 2021365714 | A1 | 25 November 2021 | US | 11188798 | B1 | 30 November 2021 |
| US | 2021097382 | A1 | 01 April 2021 | EP | 4035406 | A1 | 03 August 2022 |
| | | | | WO | 2021061682 | A1 | 01 April 2021 |
| WO | 2022227207 | A1 | 03 November 2022 | CN | 113011533 | A | 22 June 2021 |
| CN | 115578739 | A | 06 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310444662